# EUROPÄISCHE PATENTSCHRIFT

(11) **EP 4 285 080 B1**
(45) Veröffentlichungstag und Bekanntmachung des Hinweises auf die Patenterteilung: **23.07.2025**
(21) Anmeldenummer: 21702942.0
(22) Anmeldetag: 29.01.2021
(51) Int. Cl.: G01B 11/06, G01B 11/30, G01N 21/45, G01N 21/55, G01N 21/84

(54) **VERFAHREN ZUM COMPUTERGESTÜTZTEN ERMITTELN PHYSIKALISCHER EIGENSCHAFTEN EINER AN EINER OBERFLÄCHE EINES SUBSTRATS BEFINDLICHEN PORÖSEN SCHICHT**
METHOD FOR THE COMPUTER-ASSISTED DETERMINATION OF PHYSICAL PROPERTIES OF A POROUS LAYER DISPOSED ON A SURFACE OF A SUBSTRATE
PROCÉDÉ DE DÉTERMINATION ASSISTÉE PAR ORDINATEUR DE PROPRIÉTÉS PHYSIQUES D'UNE COUCHE POREUSE DISPOSÉE SUR UNE SURFACE D'UN SUBSTRAT

(43) Veröffentlichungstag der Anmeldung: 06.12.2023
(73) Patentinhaber: Universität Konstanz, 78464 Konstanz (DE)
(72) Erfinder: MICARD, Gabriel, 78467 Konstanz (DE); BOTCHAK MOUAFI, Yves Patrick, 78479 Reichenau (DE); TERHEIDEN, Barbara, 78465 Konstanz (DE)
(74) Vertreter: Qip Patent & Recht Dr. Kuehn & Partner mbB
(86) Internationale Anmeldenummer: PCT/EP2021/052129
(87) Internationale Veröffentlichungsnummer: WO 2022/161618

(56) Entgegenhaltungen:
- DE-A1- 102015 115 117
- US-A1- 2011 276 166

## Beschreibung

### GEBIET DER ERFINDUNG

Die vorliegende Erfindung betrifft ein Verfahren, mithilfe dessen physikalische Eigenschaften wie insbesondere eine Schichtdicke, eine Porosität und eine Rauigkeit einer an einer Oberfläche eines Substrats befindlichen porösen Schicht vorteilhaft ermittelt werden können. Die Erfindung betrifft ferner eine Vorrichtung, ein Computerprogrammprodukt und ein das Computerprogrammprodukt speicherndes computerlesbares Medium, mithilfe derer das Verfahren ausgeführt oder gesteuert werden kann.

### HINTERGRUND DER ERFINDUNG

Für verschiedene technische Anwendungen kann es notwendig sein, eine poröse Schicht an einer Oberfläche eines Substrats abzuscheiden. Physikalische Eigenschaften dieser porösen Schicht können dann Eigenschaften wie beispielsweise optische Eigenschaften, elektrische Eigenschaften, mechanische Eigenschaften, etc. eines mithilfe des Substrats gebildeten Bauteils beeinflussen. Solche physikalischen Eigenschaften der porösen Schicht sind insbesondere deren Schichtdicke, deren Porosität und deren Rauigkeit an einer Grenzfläche zu dem die Schicht tragenden Substrat.

Beispielsweise ist eine Technologie bekannt, mithilfe derer Solarzellen oder andere mikroelektronische Anwendungen auf Basis sehr kostengünstig herstellbarer Substrate bereitgestellt werden können. Eine mögliche Ausgestaltung einer solchen Technologie zur Herstellung von Solarzellen ist beispielsweise in DE 197 30 975 A1 beschrieben. Bei dieser Technologie wird an einer Oberfläche eines Substrats, insbesondere eines Halbleitersubstrats oder speziell eines Siliziumwafers, eine poröse Schicht erzeugt. Für den Fall, dass als Substrat ein Siliziumwafer eingesetzt wird, kann die poröse Schicht in Form einer porösen Siliziumschicht erzeugt werden, beispielsweise indem der Siliziumwafer an seiner Oberfläche einem Ätzvorgang unterzogen wird, bei dem oberflächennah Poren in dem Siliziumwafer generiert werden. Die poröse Schicht kann als einzelne Schicht oder als Stapel aus zwei oder mehr Teilschichten ausgebildet sein. Auf die poröse Schicht kann nachfolgend eine weitere Schicht, insbesondere eine Halbleiterschicht, aufgetragen werden, beispielsweise durch Epitaxie. Diese weitere Schicht kann nachfolgend von dem Substrat getrennt werden, wobei die dazwischenliegende poröse Schicht als Trennschicht bzw. Sollbruchstelle dienen kann. Die auf diese Weise erzeugte, möglicherweise sehr dünne weitere Schicht kann nachfolgend als neues Substrat für ein Bauelement, insbesondere eine Solarzelle, dienen.

Eine Qualität eines auf diese Weise gebildeten neuen Substrats kann hierbei insbesondere von einer räumlichen Homogenität der Dicke und/oder der Porosität der porösen Schicht beeinflusst sein.

Um physikalische Eigenschaften einer auf einem Substrat erzeugten porösen Schicht ermitteln zu können, sind verschiedene herkömmliche Verfahren bekannt.

Beispielsweise ermöglicht ein gravimetrisches Verfahren ein Abschätzen der Porosität und Dicke einer einzelnen porösen Schicht an einem Substrat aus einer Messung einer Masse des Substrats vor einem Porosifizieren, einer Messung der Masse des Substrats nach dem Porosifizieren und einer Messung der Masse des Substrats nach einem Entfernen der porösen Schicht. Dieses Verfahren liefert jedoch lediglich räumlich gemittelte Werte der Porosität und Dicke. Außerdem liefert das Verfahren keine Information über poröse Teilschichten einer gestapelten porösen Doppelschicht. Ferner leidet dieses Verfahren typischerweise unter hohen Ungenauigkeiten und ist destruktiv.

Im Gegensatz hierzu können Reflexions- oder Ellipsometriemessungen an mehreren Stellen eines mit einer porösen Schicht versehenen Substrats räumliche Informationen über eine Dicke und/oder Porosität einer einzelnen oder doppelten porösen Schicht liefern und dabei nicht-destruktiv sein.

Es wurden Ellipsometrieverfahren entwickelt, welche jedoch relativ ebene Substratoberflächen, idealerweise polierte Substratoberflächen, erfordern, um zuverlässige Ergebnisse liefern zu können. Dementsprechend sind solche Ellipsometrieverfahren häufig insbesondere bei Anwendungen, bei denen keine ausreichend ebenen Substratoberflächen zur Verfügung stehen, wenig robust.

Es werden daher Reflexionsverfahren angestrebt, bei denen Messungen einer optischen Reflexion (englisch: reflectance) von auf die poröse Schicht eingestrahltem Licht dazu genutzt werden, um physikalische Eigenschaften dieser Schicht ermitteln zu können. Allerdings waren bisherige Ansätze solcher Verfahren oft defizitbehaftet. Insbesondere waren solche bisherigen Ansätze oft wenig robust und/oder erforderten einen hohen apparativen und/oder zeitlichen Aufwand.

US 2011/276166 A1 beschreibt Verfahren und Systeme zum Kontrollieren eines Oberflächenmodifikationsprozesses. DE 10 2015 115117 A1 beschreibt ein Verfahren zur optischen in-situ-Kontrolle zumindest einer auf einem Substrat aufwachsenden Schicht aus Verbindungshalbleitern.

### ZUSAMMENFASSUNG DER ERFINDUNG UND VORTEILHAFTER AUSFÜHRUNGSFORMEN

Es wurde somit erkannt, dass ein Bedarf an einem verbesserten Verfahren zum Ermitteln physikalischer Eigenschaften einer an einer Oberfläche eines Substrats befindlichen porösen Schicht besteht, bei dem insbesondere einige der genannten Defizite vermieden oder reduziert sind. Insbesondere wurde ein Bedarf an einem solchen Verfahren erkannt, welches zuverlässige Ergebnisse für die zu ermittelnden physikalischen Eigenschaften liefert, mit relativ geringem apparativen Aufwand umsetzbar ist, innerhalb verhältnismäßig kurzer Zeit durchzuführen ist, nicht destruktiv ist, teilweise oder vollständig automatisiert ausführbar ist, eine räumliche Auflösung bezüglich der zu ermittelnden physikalischen Eigenschaften entlang der Erstreckung der porösen Schicht ermöglicht und/oder für poröse Einzelschichten sowie für poröse Doppelschichten einsetzbar ist. Ferner wurde ein Bedarf an einer Vorrichtung und/oder einem Computerprogrammprodukt, mithilfe derer das Verfahren durchgeführt bzw. gesteuert werden kann, sowie an einem computerlesbaren Medium mit einem darauf gespeicherten solchen Computerprogrammprodukt erkannt.

Einem solchen Bedarf kann mit dem Gegenstand eines der unabhängigen Ansprüche entsprochen werden. Vorteilhafte Ausführungsformen sind in den abhängigen Ansprüchen sowie in der nachfolgenden Beschreibung sowie den Figuren dargelegt.

Gemäß einem ersten Aspekt der Erfindung wird ein Verfahren zum computergestützten Ermitteln von physikalischen Eigenschaften einer an einer Oberfläche eines Substrats befindlichen porösen Schicht beschrieben. Die physikalischen Eigenschaften umfassen hierbei zumindest eine Schichtdicke der Schicht, eine Porosität der Schicht und eine Rauigkeit der Schicht an einer Grenzfläche zu dem die Schicht tragenden Substrat. Das Verfahren umfasst zumindest die folgenden Verfahrensschritte, möglicherweise, aber nicht notwendigerweise, in der angegebenen Reihenfolge:
- Erfassen eines Reflexionsverlaufs betreffend auf die poröse Schicht eingestrahlten Lichts innerhalb eines Wellenlängenbereichs, in dem die poröse Schicht weitgehend transparent ist,
- Setzen eines vorbestimmten Rauigkeitsstartwerts,
- Setzen eines Porositätsstartwerts basierend auf Kenntnissen betreffend einen Herstellungsprozess zum Bilden der porösen Schicht
- Setzen eines Schichtdickenstartwerts basierend auf einer Auswertung von periodischen Schwankungen von Reflexionsintensitäten innerhalb des erfassten Reflexionsverlaufs,
- Ermitteln der physikalischen Eigenschaften der porösen Schicht durch computergestütztes Anfitten des erfassten Reflexionsverlaufs unter Verwendung einer nichtlinearen Methode der kleinsten Quadrate ausgehend von dem Rauigkeitsstartwert, dem Porositätsstartwert und dem Schichtdickenstartwert.

Gemäß einem zweiten Aspekt der Erfindung wird eine Vorrichtung beschrieben, welche dazu konfiguriert ist, Ausführungsformen des Verfahrens gemäß dem ersten Aspekt der Erfindung auszuführen oder zu steuern.

Gemäß einem dritten Aspekt der Erfindung wird ein Computerprogrammprodukt beschrieben, welches computerlesbare Anweisungen umfasst, welche bei deren Ausführung durch einen Computer den Computer dazu anweisen, das Verfahren gemäß einer Ausführungsform des ersten Aspekts der Erfindung auszuführen oder zu steuern.

Gemäß einem vierten Aspekt der Erfindung wird ein computerlesbares Medium beschrieben, auf dem ein Computerprogrammprodukt gemäß dem dritten Aspekt der Erfindung gespeichert ist.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Stark verkürzt zusammengefasst kann ein Ansatz für Ausführungsformen des hierin beschriebenen Verfahrens darin gesehen werden, physikalische Eigenschaften einer porösen Schicht auf einer Substratoberfläche durch eine geschickte Analyse von Reflexionseigenschaften dieser porösen Schicht einschließlich der darunterliegenden Substratoberfläche zu ermitteln. Dabei wurde insbesondere erkannt, dass dadurch, dass ein zuvor erfasster Reflexionsverlauf unter Zuhilfenahme einer bestimmten Klasse von Approximationsverfahren hinsichtlich von den Reflexionsverlauf beeinflussenden physikalischen Eigenschaften angefittet wird und dabei für die physikalischen Eigenschaften jeweils geeignete Startwerte gewählt werden, ein zuverlässiges, robustes und schnell auszuführendes Verfahren zum Ermitteln der realen physikalischen Eigenschaften der porösen Schicht bereitgestellt werden kann. Als geeignete Klasse von Approximationsverfahren wurden hierbei nichtlineare Methoden der kleinsten Quadrate, manchmal auch als nichtlineare Methoden der kleinsten Fehlerquadrate bezeichnet (englisch: nonlinear least-square procedures), erkannt. Als Startparameter können bei solchen Approximationsverfahren vorzugsweise Startparameter für jede der zu ermittelnden physikalischen Eigenschaften zu Grunde gelegt werden, die entweder vorbestimmt sein können und beispielsweise aus früheren Erfahrungen oder Grundannahmen abgeleitet sein können und als konstant angenommen werden können oder die aus einem Wissen über den zum Bilden der porösen Schicht eingesetzten Herstellungsprozess abgeleitet werden können. Als weitere Alternative können Startparameter eingesetzt werden, die in verhältnismäßig einfacher und/oder automatisierter Weise aus dem erfassten Reflexionsverlauf abgeleitet werden können.

Nachfolgend werden genauere Details zu möglichen Ausgestaltungen, Eigenschaften und Vorteilen von Ausführungsformen des hierin vorgeschlagenen Verfahrens erläutert.

Mithilfe des vorgeschlagenen Verfahrens sollen physikalische Eigenschaften einer an der Oberfläche eines Substrats angeordneten porösen Schicht ermittelt werden.

Bei dem Substrat kann es sich um ein Siliziumsubstrat, insbesondere einen Siliziumwafer handeln. Das Substrat kann jedoch auch aus einem anderen Material, insbesondere einem Halbleitermaterial bestehen. Das Substrat weist im Allgemeinen eine Dicke von mehr als 100 µm auf. Das Substrat besteht im Allgemeinen aus massivem Material, oft aus kristallinem, d.h. monokristallinem, multikristallinem oder polykristallinem, Material.

Die poröse Schicht kann, muss aber nicht notwendigerweise, aus dem gleichen Material bestehen wie das Substrat. Die poröse Schicht kann insbesondere aus einem Halbleitermaterial bestehen. Bei der porösen Schicht kann sich insbesondere um eine Siliziumschicht handeln, in welcher durch geeignete Behandlung eine Vielzahl kleiner Poren erzeugt wurde. Die Poren können Abmessungen bzw. Durchmesser im Bereich von 2 nm oder sogar weniger bis hin zu 50 nm aufweisen. Die Poren können beispielsweise durch ein Ätzen der Siliziumschicht, insbesondere ein anisotropes Ätzen, erzeugt werden. Gegebenenfalls kann sich an einen Ätzschritt ein Temperaturschritt anschließen, bei dem das Substrat einschließlich der geätzten Oberfläche bei einer beispielsweise um mehrere 100 K erhöhten Temperatur gehalten wird, sodass eine Umorganisation bzw. Geometrieänderung von während des Ätzens entstandenen Strukturen wie beispielsweise geätzten Kanälen stattfinden kann, um Poren geeigneter Größe und/oder Form zu bilden.

Als physikalische Eigenschaften können insbesondere solche Eigenschaften ermittelt werden, die ein optisches Verhalten der porösen Schicht und somit ein Reflexionsverhalten der porösen Schicht auf der Oberfläche des Substrats beeinflussen. Zu solchen physikalischen Eigenschaften zählen insbesondere eine Schichtdicke der porösen Schicht, eine Porosität der porösen Schicht und eine Rauigkeit der porösen Schicht an einer Grenzfläche zu dem darunterliegenden Substrat. In Fällen, in denen die poröse Schicht aus mehreren Teilschichten besteht, können die physikalischen Eigenschaften die Schichtdicken und Porositäten der jeweiligen Teilschichten sowie die Rauigkeiten an einer Grenzfläche zu dem Substrat bzw. zu einer benachbarten Teilschicht umfassen. Die ermittelten physikalischen Eigenschaften können neben einem optischen Verhalten auch andere Eigenschaften der porösen Schicht wie insbesondere mechanische Eigenschaften, elektrische Eigenschaften und ähnliches beeinflussen.

Die Schichtdicke der porösen Schicht kann als Abstand zwischen einer nach außen freiliegenden Oberfläche der porösen Schicht und einer an das Substrat angrenzenden Grenzfläche der porösen Schicht verstanden werden. Für viele Anwendungen können poröse Schichten mit einer Schichtdicke im Bereich von hundert oder einigen hundert Nanometern (beispielsweise zwischen 100 nm und 900 nm) bis hin zu wenigen Mikrometern (beispielsweise weniger als 10 µm oder weniger als 3 µm) oder in manchen Fällen sogar bis hin zu einigen 10 µm (beispielsweise weniger als 50 µm) eingesetzt werden.

Die Schichtdicke beeinflusst dabei das Reflexionsverhalten der porösen Schicht dahingehend, dass an der Oberfläche der porösen Schicht einerseits und der Grenzfläche der porösen Schicht zum Substrat andererseits jeweils Teile eingestrahlten Lichts reflektiert werden und es dabei zu Interferenzen zwischen den beiden Reflexionsanteilen kommt. Aufgrund dieser Interferenzen variiert eine Intensität von reflektiertem Licht stark abhängig von einer Wellenlänge des Lichts, da es für manche Wellenlängen zu einer verstärkenden Interferenz und für andere Wellenlängen zu einer schwächenden oder sogar auslöschenden Interferenz kommt. Anders ausgedrückt kann es durch Überlagerung von Reflexionsanteilen von an der Vorderseite und an der Rückseite reflektierten Teilen eingestrahlten Lichts zu positiven, verstärkenden oder negativen, abschwächenden Interferenzen kommen.

Die Porosität der porösen Schicht kann als Verhältnis eines Volumens aller in einem Teilvolumen der porösen Schicht enthaltenen Poren zu dem gesamten Teilvolumen angesehen werden. Dabei kann eine große Anzahl kleiner Poren zu einer gleichen Porosität führen wir eine kleine Anzahl größerer Poren. Die poröse Schicht kann insbesondere mikroporös oder mesoporös sein.

Die Porosität kann lateral entlang der porösen Schicht variieren. Insbesondere können lokale Inhomogenitäten beim Bilden der porösen Schicht, verursacht beispielsweise durch Konzentrationsschwankungen innerhalb einer hierzu eingesetzten Ätzlösung und/oder Inhomogenitäten im elektrischen Feld, zu einer lateral variierenden Porosität innerhalb der porösen Schicht führen.

Auch in orthogonaler Richtung, d.h. in Richtung der Dicke der porösen Schicht, kann eine Porosität innerhalb einer Schicht variieren, beispielsweise aufgrund unterschiedlich starker Konzentrationen der Ätzlösung im Verlauf des Ätzvorgangs und/oder aufgrund variierender elektrischer Felder innerhalb der zu ätzenden Substratschicht, welche den Ätzvorgang beeinflussen. Allerdings variiert die Porosität in orthogonaler Richtung typischerweise lediglich geringfügig, d.h. typischerweise weniger als 5% oder sogar weniger als 1%.

Es sind jedoch Anwendungen bekannt, denen die Porosität in orthogonalen Richtung vorzugsweise in verschiedenen Bereichen der porösen Schicht verglichen mit anderen Bereichen der porösen Schicht stark variieren soll. Hierzu kann die poröse Schicht aus zwei oder mehr Teilschichten ausgebildet werden. Jede einzelne Teilschicht kann in einer spezifischen Weise, d.h. beispielsweise mit einer für sie spezifisch eingesetzten Ätzlösung, gebildet werden, sodass sich darin eine gewünschte Porosität einstellt. In orthogonalen Richtungen weist jede der Teilschichten dann eine typischerweise lediglich geringfügig variierende Porosität auf. Die Porositäten benachbarter Teilschichten können sich jedoch erheblich unterscheiden, beispielsweise um zwischen 5% und 50%.

Generell beeinflusst die Porosität einer Schicht deren optische Eigenschaften und damit auch das Reflexionsverhalten an der porösen Schicht. Insbesondere hängt ein optischer Brechungsindex der porösen Schicht im Allgemeinen von deren Porosität ab.

Die Rauigkeit der porösen Schicht an der Grenzfläche zu dem Substrat kann als ein Maß der Unebenheit der Grenzfläche am Übergang zwischen der porösen Schicht und dem angrenzenden massiven Substrat verstanden werden. Die Rauigkeit bzw. die Unebenheiten können durch eine Größenverteilung, Form und/oder Anordnung der in der porösen Schicht vorhandenen Poren bestimmt bzw. beeinflusst sein.

Die Rauigkeit der Grenzfläche an der porösen Schicht kann unter anderem eine Intensität und/oder Richtungsabhängigkeit von Reflexionen an dieser Grenzfläche beeinflussen. Eine höhere Rauigkeit kann zu einer stärker diffusen Reflexion führen. Ferner kann die Rauigkeit ebenso wie die Porosität die Interferenzen bezüglich an der porösen Schicht reflektiertem Licht in einer komplexen Weise beeinflussen.

Um die genannten physikalischen Eigenschaften der porösen Schicht ermitteln zu können, wird ein zuvor erfasster Reflexionsverlauf analysiert. Der Reflexionsverlauf gibt hierbei eine Intensität von Licht wieder, welches bei Einstrahlen von Licht auf die poröse Schicht und das darunterliegende Substrat an diesen reflektiert wird. Dabei wird das Licht mit einer bekannten Intensität und einem bekannten Spektrum eingestrahlt und mithilfe eines Detektors das reflektierte Licht detektiert. Der Reflexionsverlauf gibt hierbei für jede einer Vielzahl von Wellenlängen innerhalb eines Wellenlängenbereichs an, mit welcher Intensität das eingestrahlte Licht reflektiert wird, d.h. welcher Anteil des eingestrahlten Lichts zu dem Detektor zurück reflektiert wird. Der Reflexionsverlauf wird, wie vorangehend bereits geschildert, stark von den zu ermittelnden Eigenschaften der porösen Schicht beeinflusst.

Der Reflexionsverlauf kann hierbei innerhalb eines Wellenlängenbereichs aufgenommen werden, in dem die poröse Schicht weitgehend transparent ist. Unter "weitgehend transparent" kann dabei verstanden werden, dass allenfalls ein vernachlässigbarer Anteil des eingestrahlten Lichts, beispielsweise weniger als 30 %, vorzugsweise weniger als 15 % und stärker bevorzugt weniger als 5 % des eingestrahlten Lichts, beim einmaligen Durchqueren der porösen Schicht absorbiert wird.

Dementsprechend erreicht ein überwiegender Anteil des eingestrahlten Lichts die Grenzfläche zwischen der porösen Schicht und dem Substrat und kann teilweise an dieser Grenzfläche reflektiert werden. Demzufolge kann es zu Interferenzen zwischen dem an dieser Grenzfläche reflektierten Licht und dem an der Oberfläche der porösen Schicht reflektierten Licht kommen, welche den Reflexionsverlauf maßgeblich beeinflussen. Letztendlich kann aus dem Reflexionsverlauf somit eine Information über die beeinflussenden physikalischen Eigenschaften, insbesondere die Dicke der porösen Schicht, deren von der Porosität abhängigen Brechungsindex und deren Rauigkeit, abgeleitet werden.

Als weitgehend transparenter Wellenlängenbereich kann beispielsweise im Falle von einer porösen Schicht aus Silizium ein Wellenlängenbereich mit einer Untergrenze etwa zwischen 500 nm und 600 nm und einer Obergrenze von bis zu 2000 nm, vorzugsweise einer Obergrenze von etwa zwischen 1050 nm und 1200 nm gewählt werden. Dem liegt die Annahme zugrunde, dass bei Wellenlängen unterhalb von ca. 500 nm bis 600 nm Silizium beginnt, Licht stark zu absorbieren. Bei Wellenlängen oberhalb von ca. 1050 nm bis 1200 nm beginnt Silizium, für eingestrahltes Licht quasi vollständig transparent zu werden, sodass es zu Effekten wie z.B. Reflexionen an einer Rückseite des Siliziumsubstrates kommen kann, welche Reflexionsmessungen stören können.

Der Reflexionsverlauf kann zeitgleich bzw. kurz vor Durchführung des hierin beschriebenen Verfahrens aufgenommen werden, beispielsweise mit einer Messeinrichtung zum Messen dieses Reflexionsverlaufs, welche mit einer Vorrichtung zum Durchführen des hierin beschriebenen Verfahrens gekoppelt oder in diese integriert ist. Alternativ kann der Reflexionsverlauf bereits zu einem früheren Zeitpunkt aufgenommen und zwischenzeitlich abgespeichert worden sein und dann beispielsweise erst bei Durchführung des hierin beschriebenen Verfahrens aus einem Speicher ausgelesen werden.

Um den Reflexionsverlauf zu analysieren und aus diesem die gewünschten physikalischen Eigenschaften zu ermitteln, wird der erfasste Reflexionsverlauf unter Verwendung einer nichtlinearen Methode der kleinsten Quadrate computergestützt angefittet. Hierzu werden Reflexionseigenschaften der porösen Schicht unter Berücksichtigung von deren physikalischen Eigenschaften in einer Weise modelliert, dass sich ein Verlauf von hierdurch berechneten wellenlängenabhängigen Reflexionseigenschaften dem tatsächlich erfassten Reflexionsverlaufs annähert bzw. approximiert, das heißt den Reflexionsverlauf anfittet.

Es wurde erkannt, dass unter verschiedenen bekannten Approximationsverfahren bzw. zum Anfitten verwendeten Algorithmen die Methoden der kleinsten Quadrate eine geeignete Option darstellen, um durch Anfitten des tatsächlichen Reflexionsverlaufs zuverlässig Aussagen über die physikalischen Eigenschaften der porösen Schicht ableiten zu können. Insbesondere wurde erkannt, dass unter der Vielzahl bekannter Methoden der kleinsten Quadrate insbesondere die nichtlinearen Methoden der kleinsten Quadrate zur Erlangung solcher zuverlässiger Aussagen geeignet erscheinen. Bei solchen nichtlinearen Methoden gehen Parameter nichtlinear in eine Funktion ein, wodurch im Prinzip eine Anpassung an Daten an jede Gleichung der Form y=f(a) ermöglicht wird. Da solche Gleichungen Kurven definieren, werden die Begriffe "Anfitten einer Kurve" (englisch: curve fitting) und nichtlineare Regression (englisch: nonlinear regression) oft synonym gebraucht.

Ein optisches Modell, um einen Reflexionsverlauf (manchmal auch als Reflexionsspektrum bezeichnet; englisch: reflectance spectrum) anzufitten, kann auf einem Transfermatrixverfahren (englisch; transfer matrix method) basieren, bei dem jede Schicht durch ihre Dicke und ihren optischen Brechungsindex beschrieben wird und jede Grenzfläche zwischen zwei Schichten durch ihre Rauigkeit und die optischen Brechungsindizes innerhalb zweier an der Grenzfläche aneinandergrenzenden Bereiche. Um einen Brechungsindex einer porösen Schicht zu berechnen oder abzuschätzen, kann die poröse Schicht beispielsweise durch eine sogenannte Bruggemann-Approximation als Mischung aus festem Material und darin eingeschlossenen Gasblasen in einem Verhältnis P, welches der Porosität der porösen Schicht entspricht, modelliert werden. In einem hohen Wellenlängenbereich, in dem beispielsweise Silizium allenfalls schwach absorbierend ist, interferieren an den verschiedenen Oberflächen und Grenzflächen der porösen Schicht reflektierte Anteile eines Lichtstrahls, was zu Oszillationen in dem Reflexionsverlauf führt. Eine Periode solcher Oszillationen ist im Allgemeinen quasi invers proportional zu einer Schichtdicke der porösen Schicht. Ein durchschnittliches Niveau und eine Amplitude der Oszillationen werden meist auf komplexe Weise durch die Rauigkeit und die Porosität der porösen Schicht beeinflusst.

Um den erfassten Reflexionsverlauf mittels einer nichtlinearen Methode der kleinsten Quadrate anfitten zu können, startet die Methode typischerweise mit angenommenen Startwerten für die Parameter, welche den zu ermittelnden physikalischen Eigenschaften entsprechen. Ausgehend von diesen Startwerten werden die Parameter dann derart variiert, dass eine möglichst gute Übereinstimmung zwischen einer hierbei berechneten Fit-Kurve und dem tatsächlichen Reflexionsverlauf entsteht.

Es wurde erkannt, dass die Wahl geeigneter Startwerte einen erheblichen Einfluss auf eine Qualität der letztendlich approximierten Parameter der zu ermittelnden physikalischen Eigenschaften haben kann. Insbesondere wurde beobachtet, dass die Wahl geeigneter Startwerte bei einer Verwendung von nichtlinearen Methoden der kleinsten Quadrate im Vergleich zu anderen Approximationsverfahren zwar weniger kritisch sein kann, dass aber dennoch eine Qualität der letztendlich approximierten Parameter erheblich davon abhängen kann, wie nahe die Startwerte den tatsächlichen Parametern der zu ermittelnden physikalischen Eigenschaften anfänglich lagen. Anders ausgedrückt wurde beobachtet, dass ein Algorithmus einer nichtlinearen Methode der kleinsten Quadrate oft nur dann zuverlässig konvergiert, wenn die Startwerte sehr nahe bei den gesuchten, tatsächlichen Werten liegen.

Bei bisherigen Ansätzen galt es meist als Herausforderung, geeignete Startwerte für die verschiedenen zu ermittelnden physikalischen Eigenschaften auszuwählen. Häufig wurden diese in einem Versuch-und-Irrtum-Ansatz (trial and error) ausgewählt. Dies konnte sehr zeitaufwendig sein. Außerdem konnte es einige Erfahrungen bei einem Anwender, der das Approximationsverfahren einsetzte, erfordern, um zu ausreichend genauen Aussagen hinsichtlich der zu ermittelnden physikalischen Eigenschaften zu gelangen. Hinzu kommt, dass die zu ermittelnden physikalischen Eigenschaften entlang einer lateralen Erstreckung der porösen Schicht signifikant variieren können, sodass ein einmal gefundener Satz von Parametern, der an einer Position der porösen Schicht zu zufriedenstellenden Ergebnissen bei dem Approximationsverfahren führt, an anderen Positionen der porösen Schicht nicht notwendigerweise ebenfalls zufriedenstellend funktioniert. Auch hierdurch wurden bisherige Ansätze zur Verwendung von Approximationsverfahren erschwert und insbesondere zeitaufwendig und Anwendererfahrung-fordernd.

Neben einer geschickten Wahl der nichtlinearen Methode der kleinsten Quadrate als Approximationsverfahren ermöglicht auch das zielgerichtete Setzen von Startwerten für die einzelnen physikalischen Eigenschaften bei dem hierin vorgeschlagenen Verfahren eine hohe Zuverlässigkeit und Genauigkeit der letztendlich erhaltenen Ergebnisse für die zu ermittelnden physikalischen Eigenschaften.

Als Startwert für die Rauigkeit (hierin nachfolgend als Rauigkeitsstartwert bezeichnet) kann hierbei vereinfacht ein vorbestimmter Wert gewählt werden. Der vorbestimmte Rauigkeitsstartwert kann auf Vorerfahrungen, Experimenten, Berechnungen, Simulationen oder anderen vorab verfügbaren Kenntnissen beruhend ermittelt worden sein. Der vorbestimmte Rauigkeitsstartwert kann unabhängig von Kenntnissen über das konkrete Substrat und/oder unabhängig von Kenntnissen über die konkrete poröse Schicht bzw. über deren Herstellung ermittelt worden sein. Insbesondere kann der vorbestimmte Rauigkeitsstartwert in vielen Fällen zumindest als grobe Näherung als null angenommen werden.

Der Rauigkeitsstartwert kann hierbei vorzugsweise automatisiert gesetzt werden. D.h., dass im Allgemeinen keine Anwendereingabe erforderlich sein braucht, um den Rauigkeitsstartwert im Rahmen des hierin vorgeschlagenen Verfahrens zu setzen. Außerdem wird im Allgemeinen keine besondere Expertise beispielsweise von einem Anwender, der das hierin vorgeschlagene Verfahren nutzen möchte, erwartet, um den Rauigkeitsstartwert zu setzen.

Als Startwert für die Porosität (hierin nachfolgend als Porositätsstartwert bezeichnet) kann ein Wert verwendet werden, der basierend auf Kenntnissen über den Herstellungsprozess, mithilfe dessen die poröse Schicht gebildet wurde, gewählt wird. Beispielsweise kann bekannt sein, dass die poröse Schicht in einer Weise erzeugt wurde, dass sich bei ihr typischerweise eine bestimmte Porosität einstellt. Die Porosität kann dabei von unterschiedlichen Herstellungsparametern abhängen. Beispielsweise kann eine durch Ätzen erzeugte poröse Schicht hinsichtlich ihrer Porosität von einer Konzentration der eingesetzten Ätzlösung, einem angelegten Strom bzw. einer angelegten Spannung, einer Dauer des Ätzvorgangs, einer während des Ätzvorgangs vorherrschenden Temperatur, Eigenschaften des zu ätzenden Substrats, Eigenschaften von Nachbehandlungsschritten wie insbesondere einer nachfolgenden Temperaturbehandlung zum Umorganisieren entstandener Ätzstrukturen, etc. beeinflusst sein. Aus einer Kenntnis der Herstellungsparameter zum Bilden der porösen Schicht kann somit zumindest ein grober Schätzwert für die tatsächliche Porosität dieser Schicht abgeleitet werden und dieser als Porositätsstartwert angenommen werden.

Zum Setzen des Porositätsstartwerts kann es eventuell notwendig sein, dass ein das hierin vorgeschlagene Verfahren anwendender Anwender ein oder mehrere Angaben hinsichtlich des Herstellungsprozesses für die poröse Schicht eingibt. Allerdings werden hierfür von dem Anwender meist keine tieferen Kenntnisse hinsichtlich des Herstellungsprozesses erwartet. Beispielsweise kann es genügen, die einzugebenden Angaben einem Nachschlagewerk oder einer Tabelle zu entnehmen. Eventuell kann der Porositätsstartwert auch automatisiert gesetzt werden, indem beispielsweise Informationen über den Herstellungsprozess automatisiert, beispielsweise von anderen beim Erstellungsprozess verwendeten Einrichtungen, bereitgestellt werden.

Als Startwert für die Schichtdicke (hierin nachfolgend als Schichtdickenstartwert bezeichnet) kann ein Wert verwendet werden, der basierend auf einer Auswertung von periodischen Schwankungen von Reflexionsintensitäten innerhalb des erfassten Reflexionsverlaufs gewählt wird. Wie weiter oben erläutert, führen positive und negative Interferenzen zu periodischen Schwankungen, d.h. zu Oszillationen, innerhalb des an der porösen Schicht erfassten Reflexionsverlaufs. Insbesondere eine Periodizität dieser Schwankungen wird maßgeblich von der Schichtdicke der porösen Schicht beeinflusst. Durch ein Auswerten der periodischen Schwankungen in dem Reflexionsverlauf kann somit ein guter Startwert für diese Schichtdicke abgeschätzt werden, welcher der real vorliegenden Schichtdicke der porösen Schicht bereits sehr nahe kommt.

Beispielsweise kann hierzu ein Wellenlängenabstand zwischen zwei benachbarten Wellenlängen innerhalb des Reflexionsverlaufs, an denen die periodischen Schwankungen des Reflexionsverlaufs jeweils ein Extremum, d.h. beispielsweise ein Maximum oder Minimum erreichen, ermittelt werden. Aus diesem Wellenlängenabstand kann dann der Schichtdickenstartwert mathematisch abgeleitet werden, da solche Extrema hauptsächlich abhängig von der Schichtdicke der porösen Schicht und deren Brechungsindex sind.

Dabei kann dieser Schichtdickenstartwert vollständig oder weitgehend automatisiert ermittelt werden, da die periodischen Schwankungen innerhalb des Reflexionsverlaufs automatisiert ausgelesen und ausgewertet werden können.

Mit Ausführungsformen des hierin beschriebenen Verfahrens können im Allgemeinen automatisiert und robust geeignete Startwerte gesetzt werden, um physikalische Eigenschaften einer einzelnen porösen Schicht ermitteln zu können. Beim Ermitteln der physikalischen Eigenschaften von porösen Doppelschichtstrukturen möglichen Ausführungsformen des hierin beschriebenen Verfahrens im Allgemeinen geeignete Startwerte innerhalb eines weiteren Bereichs zu setzen. Die verschiedenen Startwerte können dabei zumindest teilweise automatisiert gesetzt werden. Es wird daher ein erfolgreiches Anfitten und somit ein Ermitteln der physikalischen Eigenschaften der porösen Schicht ermöglicht, wobei allenfalls minimale Interventionen und/oder Kenntnisse auf Seiten eines Anwenders des Verfahrens erforderlich sein können.

Außerdem kann ein weiterer Bereich von Parameterkombinationen und Variationen innerhalb eines Substrats abgedeckt werden.

Gemäß einer Ausführungsform kann als die nichtlineare Methode der kleinsten Quadrate ein Levenberg-Marquardt-Algorithmus oder ein Trust-Region-Verfahren, insbesondere ein Trust-Region-Reflective-Verfahren, verwendet werden.

Der Levenberg-Marquardt-Algorithmus ist ein numerischer Optimierungsalgorithmus zur Lösung nichtlinearer Ausgleichsprobleme mithilfe der Methode der kleinsten Quadrate. Es wurde beobachtet, dass bei einer Verwendung des Levenberg-Marquardt-Algorithmus zum Anfitten des erfassten Reflexionsverlaufs eine im Vergleich zur Verwendung anderer Algorithmen verhältnismäßig hohe Robustheit erreicht werden kann, d.h., der Algorithmus konvergiert mit einer hohen Wahrscheinlichkeit auch bei relativ schlechten Startbedingungen.

Die Trust-Region-Verfahren bzw. in einer speziellen Ausgestaltung die Trust-Region-Reflective-Verfahren (englisch: trust region reflective procedure) sind eine Klasse von robusten und effizienten Globalisierungsstrategien zur numerischen Berechnung eines lokalen Minimums einer möglichen nicht konvexen, einmalig stetig differenzierbaren Funktion. Die Trust-Region-Verfahren sind eng verwandt mit dem Levenberg-Marquardt-Algorithmus, besitzen jedoch signifikante Unterschiede in den zu lösenden quadratischen Teilproblemen. Mit der Verwendung eines Trust-Region-Verfahrens lässt sich ähnlich wie mit einem Levenberg-Marquardt-Algorithmus beim Anfitten des erfassten Reflexionsverlaufs eine im Vergleich zur Verwendung anderer Algorithmen verhältnismäßig hohe Robustheit erreichen. Außerdem können Trust-Region-Verfahren es vorteilhafterweise zulassen, Grenzen für Parameter zu setzen, was bei dem Levenberg-Marquardt-Algorithmus typischerweise nicht der Fall ist.

Gemäß einer Ausführungsform kann der Reflexionsverlauf Messwerte der Reflexion an der porösen Schicht in Wellenlängenabständen von weniger als 30 nm, vorzugsweise weniger als 20 nm, 10 nm oder sogar 5 nm umfassen.

Es wurde als vorteilhaft erkannt, den Reflexionsverlauf mit einer hohen Auflösung hinsichtlich der darin enthaltenen Reflexionsmesswerte zu erfassen. Insbesondere wurde erkannt, dass ein Abstand bezüglich der benachbarten Wellenlängen, bei denen Reflexionsmessungen durchgeführt wurden, um letztendlich das gesamte Reflexionsspektrum zu erhalten, vorzugsweise relativ kurz gehalten werden sollte, insbesondere kleiner als 30 nm oder 20 nm und möglicherweise auch kleiner als 10 nm oder 5 nm. Hierdurch erhöht sich zwar einerseits die Anzahl der durchzuführenden Reflexionsmessungen, um den gesamten Reflexionsverlauf zu ermitteln, wodurch ein Aufwand zur Erfassung des Reflexionsverlaufs erhöht werden kann. Andererseits wurde jedoch beobachtet, dass ein hochaufgelöst erfasster Reflexionsverlauf bessere Ergebnisse beim anschließenden Ermitteln der physikalischen Eigenschaften der porösen Schicht durch Anfitten dieses Reflexionsverlaufs ermöglichen kann. Insbesondere wird angenommen, dass eine hohe Auflösung des Reflexionsverlaufs bei der Auswertung von periodischen Schwankungen von Reflexionsintensitäten innerhalb des Reflexionsverlaufs helfen kann und somit ein Anfitten des Reflexionsverlaufs und/oder ein geeignetes Setzen des Schichtdickenstartwerts unterstützen kann.

Gemäß einer Ausführungsform kann bei dem vorgeschlagenen Verfahren zusätzlich zu dem Schichtdickenstartwert ein kleinerer Schichtdickenstartwert, der weniger als 20%, vorzugsweise weniger als 10% kleiner als der Schichtdickenstartwert ist, und ein größerer Schichtdickenstartwert, der weniger als 20%, vorzugsweise weniger als 10% größer als der Schichtdickenstartwert ist, gesetzt werden. Der erfasste Reflexionsverlauf kann dann durch mehrmaliges computergestütztes Anfitten unter Verwendung der nichtlinearen Methode der kleinsten Quadrate ausgehend von dem Rauigkeitsstartwert, dem Porositätsstartwert und eines aus mehreren Werten aus der Gruppe umfassend den Schichtdickenstartwert, den kleineren Schichtdickenstartwert und den größeren Schichtdickenstartwert angefittet werden. Die physikalischen Eigenschaften der porösen Schicht können letztendlich basierend auf einem bei dem mehrmaligen computergestützten Anfitten gefundenen besten Fitergebnis ermittelt werden.

Es wurde beobachtet, dass die ermittelten Ergebnisse für die physikalischen Eigenschaften, die durch das Anfitten des Reflexionsverlaufs erhalten werden, im Allgemeinen umso genauer und zuverlässiger sind, je näher der angenommene Schichtdickenstartwert der tatsächlichen Schichtdicke der porösen Schicht liegt. In schwierigen Fällen, bei denen beispielsweise Messfehler, ein Nicht-ideales Verhalten der porösen Schicht, ungeeignete Annahmen hinsichtlich der Porosität der porösen Schicht oder Ähnliches dazu führen, dass das Anfitten des Reflexionsverlaufs nichts zu zufriedenstellenden Ergebnissen führt, wird daher vorgeschlagen, zusätzlich zu dem Schichtdickenstartwert, der basierend auf der Auswertung der periodischen Schwankungen von Reflexionsintensitäten innerhalb des erfassten Reflexionsverlaufs gesetzt wird, noch zwei weitere Schichtdickenstartwerte zu setzen, die jeweils leicht unterhalb bzw. leicht oberhalb des erstgenannten Schichtdickenstartwerts liegen. Das computergestützte Anfitten des Reflexionsverlaufs wird dann unter Verwendung jeweils eines dieser drei Schichtdickenstartwerte dreimal durchgeführt. Dabei können jeweils der gleiche Rauigkeitsstartwert und der gleiche Porositätsstartwert eingesetzt werden. Abschließend werden die Ergebnisse aus allen drei Anfitvorgängen bzw. die Qualität der jeweils ermittelten Fits miteinander verglichen und die physikalischen Eigenschaften der porösen Schicht werden basierend auf dem besten Fitergebnis ermittelt. Ein solcher Ansatz erlaubt eine deutlich höhere Robustheit des gesamten Verfahrens und somit eine höhere Zuverlässigkeit und/oder Genauigkeit der ermittelten physikalischen Eigenschaften.

Die zuvor dargelegten Erläuterungen betreffen allgemein das Ermitteln physikalischer Eigenschaften einer porösen Schicht, wobei die poröse Schicht insbesondere als Einzelschicht ausgebildet sein kann, d.h., eine über die Schichtdicke hinweg im Wesentlichen gleichmäßige Porosität aufweisen kann.

Nachfolgend werden Ausgestaltungen des hierin vorgestellten Verfahrens erläutert, mithilfe derer insbesondere physikalische Eigenschaften einer als Doppelschicht ausgebildeten porösen Schicht ermittelt werden können.

Gemäß einer Ausführungsform weist die poröse Schicht hierbei eine erste Teilschicht und eine zweite Teilschicht auf und die physikalischen Eigenschaften umfassen zumindest:
- eine Schichtdicke der ersten Teilschicht,
- eine Porosität der ersten Teilschicht,
- eine Rauigkeit der ersten Teilschicht an einer Grenzfläche zu einem die Schicht tragenden Substrat,
- eine Schichtdicke der zweiten Teilschicht,
- eine Porosität der zweiten Teilschicht,
- eine Rauigkeit der zweiten Teilschicht an einer Grenzfläche zu der ersten Teilschicht.

Anders ausgedrückt müssen beim Ermitteln der physikalischen Eigenschaften einer Doppelschicht insgesamt sechs Parameter approximiert werden und für jeden der sechs Parameter geeignete Startwerte gesetzt werden, wohingegen bei einer Einzelschicht im Allgemeinen lediglich drei Parameter berücksichtigt werden müssen. Die größere Anzahl von Parametern macht das Anfitten des Reflexionsverlaufs zwar einerseits aufwendiger, ermöglicht andererseits jedoch auch die Ermittlung physikalischer Eigenschaften von für den praktischen Einsatz vorteilhaft einsetzbaren porösen Schichten, die aus zwei Teilschichten mit jeweils unterschiedlichen Porositäten aufgebaut sind.

Es wurde erkannt, dass trotz der höheren Komplexität einer solchen Problemstellung mit sechs Parametern ein weitgehend automatisiert durchführbares und von einem Anwender wenig Expertise erforderndes Verfahren zum Ermitteln der physikalischen Eigenschaften einer porösen Doppelschicht bereitgestellt werden kann. Dabei kann es unter anderem darauf ankommen, die Startwerte für jeden der Parameter geschickt und/oder in einer geeigneten Reihenfolge zu setzen.

Gemäß einer Ausführungsform umfasst das Verfahren folgende Schritte:
- Setzen eines vorbestimmten ersten Rauigkeitsstartwerts und eines vorbestimmten zweiten Rauigkeitsstartwerts,
- Setzen eines ersten Porositätsstartwerts und eines zweiten Porositätsstartwerts jeweils basierend auf Kenntnissen betreffend einen Herstellungsprozess zum Bilden der porösen Schicht,
- Setzen eines ersten Schichtdickenstartwerts betreffend eine dickere der ersten und der zweiten Teilschicht basierend auf einer Auswertung von periodischen Schwankungen mit einer kleinsten Schwankungsperiode von Reflexionsintensitäten innerhalb des erfassten Reflexionsverlaufs,
- Setzen eines zweiten Schichtdickenstartwerts betreffend eine dünnere der ersten und der zweiten Teilschicht,
wobei in einem ersten Schritt des Verfahrens eine erste Dicke und eine erste Porosität der dickeren der ersten und der zweiten Teilschicht durch computergestütztes Anfitten des erfassten Reflexionsverlaufs unter Verwendung der nichtlinearen Methode der kleinsten Quadrate ausgehend von dem ersten und dem zweiten Rauigkeitsstartwert, dem ersten und dem zweiten Porositätsstartwert und dem ersten und dem zweiten Schichtdickenstartwert ermittelt werden.

Mit anderen Worten werden die Rauigkeitsstartwerte für beide Teilschichten ähnlich wie bereits weiter oben beschrieben als vorbestimmte Werte gesetzt. Insbesondere können diese Rauigkeitsstartwerte in erster Näherung zunächst auf null gesetzt werden.

Die Porositätsstartwerte für die beiden Teilschichten können ebenfalls ähnlich wie weiter oben bereits beschrieben basierend auf Kenntnissen über die poröse Schicht, die aus der Art und Weise, wie deren Teilschichten hergestellt wurden, herrühren, gesetzt werden.

Beim Setzen der Startwerte für die Schichtdicken der beiden Teilschichten wird ein im Vergleich zu einer porösen Einzelschicht anderer Ansatz gewählt. Dabei wird der Tatsache Rechnung getragen, dass bei einer Einzelschicht Reflexionen lediglich an deren vorderer Oberfläche und deren hinterer Grenzfläche zum Substrat auftreten und einander überlagern, wohingegen bei einer Doppelschicht zusätzlich auch Reflexionen an einer Grenzfläche zwischen den beiden Teilschichten auftreten und sich mit den anderen beiden Reflexionen überlagern. Dabei auftretende Interferenzen führen dazu, dass in dem resultierenden Reflexionsverlauf Schwingungen bzw. Oszillationen mit wenigstens zwei verschiedenen Periodizitäten einander überlagern. Periodische Schwankungen mit einer kleinsten Schwankungsperiode werden dabei von Interferenzen bewirkt, die aus Reflexionen an der Vorder- und Rückseite einer dickeren der beiden Teilschichten herrühren. Periodische Schwankungen mit einer größeren Schwankungsperiode rühren aus Interferenzen her, die durch Reflexionen an der Vorder-und Rückseite der dickeren der beiden Teilschichten entstehen.

Unter anderem da die periodischen Schwankungen mit der kleineren Schwankungsperiode in dem Reflexionsverlauf besser zu erkennen und auszuwerten sind, wird der Schichtdickenstartwert für die dickere Teilschicht basierend auf einer Auswertung dieser periodischen Schwankungen gesetzt. Hierbei können ähnlich wie bereits weiter oben erläutert Extrema in dem Reflexionsverlauf erkannt und analysiert werden.

Der Schichtdickenstartwert der dünneren Schicht kann in anderer Weise gesetzt werden. Beispielsweise kann der zweite Schichtdickenstartwert basierend auf Kenntnissen betreffend einen Herstellungsprozess zum Bilden der dünneren Teilschicht gesetzt werden. Hierbei kann beispielsweise aus Prozessparametern, die beim Herstellen der dünneren Teilschicht eingesetzt wurden, wie beispielsweise eine Art und Konzentration der Ätzlösung, ein angelegter Strom bzw. eine angelegte Spannung, eine Ätzdauer, vorherrschende Temperaturen, etc. Rückschlüsse auf eine sich hierdurch wahrscheinlich einstellende Schichtdicke der dünneren Teilschicht gezogen und hierauf basierend einen Schichtdickenstartwert für diese Teilschicht gesetzt werden.

Nachdem die Startwerte für die verschiedenen Parameter wie beschrieben gesetzt wurden, können die physikalischen Eigenschaften der porösen Doppelschicht ermittelt werden. Insbesondere können diese Eigenschaften sukzessive, d.h. vorzugsweise in mehreren aufeinanderfolgenden Schritten, ermittelt werden.

Dabei können in einem ersten Schritt die erste Dicke und die erste Porosität der dickeren Teilschicht durch computergestütztes Anfitten des Reflexionsverlaufs ermittelt werden, wobei von den zuvor gesetzten ersten und zweiten Rauigkeitsstartwerten, Porositätsstartwerten und Schichtdickenstartwerten ausgegangen wird.

Es wurde beobachtet, dass durch ein erfolgreiches Anfitten der periodischen Schwankungen mit der schnellsten Oszillation, d.h. mit der kleinsten Schwankungsperiode bereits ein in vielen Fällen ausreichend niedriger Anfit-Fehler erreicht werden kann, unabhängig von den Werten der anderen Parameter.

Gemäß einer weiter konkretisierten Ausführungsform kann dann in einem zweiten Schritt des Verfahrens eine zweite Dicke und eine zweite Porosität der dünneren der beiden Teilschichten durch computergestütztes Anfitten des erfassten Reflexionsverlaufs unter Verwendung der nichtlinearen Methode der kleinsten Quadrate ermittelt werden. Hierbei kann das Anfitten ausgehend von einem ersten Schichtdickenstartwert und einem ersten Porositätsstartwert durchgeführt werden, welche aus Fitergebnissen des vorangehenden ersten Schritts des Verfahrens abgeleitet werden.

Mit anderen Worten kann in dem zweiten Schritt ein Anfitten der Dicke und der Porosität allein betreffend die dünnere der beiden Teilschichten durchgeführt werden, wobei für die dickere der Teilschichten Startwerte angenommen werden, die aus dem vorangehenden ersten Schritt des Verfahrens stammen.

Es wurde beobachtet, dass hierdurch in vielen Fällen bereits ausreichend genaue und zuverlässige Ergebnisse für physikalische Eigenschaften dieser dünneren Teilschicht erhalten werden können.

Gemäß einer weiter konkretisierten Ausführungsform kann dann in einem dritten Schritt des Verfahrens eine erste Rauigkeit der dickeren Teilschicht und eine zweite Rauigkeit der dünneren Teilschicht durch computergestütztes Anfitten des erfassten Reflexionsverlaufs unter Verwendung der nichtlinearen Methode der kleinsten Quadrate ermittelt werden. Hierbei kann das Anfitten ausgehend von ersten und zweiten Schichtdickenstartwerten und ersten und zweiten Porositätsstartwerten durchgeführt werden, welche aus Fitergebnissen des vorangehenden ersten Schritts und des vorangehenden zweiten Schritts des Verfahrens abgeleitet werden.

Mit anderen Worten können in dem dritten Schritt hauptsächlich die Rauigkeiten für die beiden Teilschichten durch computergestütztes Anfitten ermittelt werden, wobei für die Schichtdicken und Porositäten der beiden Teilschichten die Ergebnisse aus den vorangehenden beiden Verfahrensschritten angenommen werden.

Es wurde beobachtet, dass hierdurch in vielen Fällen bereits ausreichend genaue und zuverlässige Ergebnisse für die Rauigkeiten erhalten werden können.

Gemäß einer weiter konkretisierten Ausführungsform können dann in einem vierten Schritt des Verfahrens alle der physikalischen Eigenschaften der ersten und der zweiten Teilschichten durch computergestütztes Anfitten des erfassten Reflexionsverlaufs unter Verwendung der nichtlinearen Methode der kleinsten Quadrate ermittelt werden. Hierbei kann das Anfitten ausgehend von ersten und zweiten Schichtdickenstartwerten, ersten und zweiten Porositätsstartwerten und ersten und zweiten Rauigkeitsstartwerten durchgeführt werden, welche aus Fitergebnissen des vorangehenden ersten Schritts, des vorangehenden zweiten Schritts und des vorangehenden dritten Schritts des Verfahrens abgeleitet werden.

Es wurde erkannt, dass insgesamt noch genauere und/oder zuverlässigere Ergebnisse für die zu ermittelnden physikalischen Eigenschaften erhalten werden können, indem in einem abschließenden vierten Schritt nochmals alle der physikalischen Eigenschaften beider Teilschichten durch ein Anfitten des Reflexionsverlaufs ermittelt werden und dabei für jeden der Startwerte derjenige jeweilige Wert eingesetzt wird, der sich in einem der vorangehenden Schritte für den jeweiligen Parameter ergeben hat.

Insgesamt können mithilfe der mehreren Schritte mit dem vorgestellten Verfahren auch für eine poröse Doppelschicht deren physikalische Eigenschaften ausreichend genau und zuverlässig ermittelt werden.

Ergänzend sei angemerkt, dass mit Ausführungsformen des hierin vorgestellten Verfahrens auch physikalische Eigenschaften von Dreifachschichten oder generell Mehrfachschichten ermittelt werden können, sofern bestimmte Voraussetzungen erfüllt sind. Beispielsweise können physikalische Eigenschaften einer Dreifachschicht durch Anfitten eines Reflexionsverlaufs oft gut ermittelt werden, sofern die dritte Teilschicht im Vergleich zu den anderen beiden Teilschichten sehr dünn ist. In diesem Fall kann die dritte Teilschicht als eine Art Rauigkeit für eine angrenzende der beiden anderen Teilschichten angesehen werden. In einer alternativen Konstellation, bei der die dritte Teilschicht eine vergleichbare Dicke wie eine der anderen Teilschichten, beispielsweise die niederporöse Teilschicht, hat, kann der Algorithmus eine sehr dicke gemeinsame Schicht mit einer gemittelten Porosität annehmen und den Reflexionsverlauf entsprechend anfitten. Auch im Falle eines sogenannten Braggreflektors, der aus einer Vielzahl von Paaren poröser Teilschichten unterschiedlicher Porosität zusammengesetzt ist, von denen bekannt ist, wie dick und wie porös sie ungefähr sind und wie viele Abfolgen geätzt wurden, können mithilfe des hierin vorgeschlagenen Verfahrens in vielen Fällen zufriedenstellende Aussagen über die physikalischen Eigenschaften der einzelnen porösen Schichten ermittelt werden. Die dabei erhaltenen sechs Parameter müssen gegebenenfalls interpretiert werden.

Gemäß einer Ausführungsform können die physikalischen Eigenschaften in mehreren aufeinanderfolgenden Verfahrensdurchläufen an mehreren Positionen entlang der Oberfläche des Substrats ermittelt werden. Die physikalischen Eigenschaften können hierbei an einer zweiten und nachfolgenden der mehreren Positionen durch computergestütztes Anfitten des erfassten Reflexionsverlaufs unter Verwendung einer nichtlinearen Methode der kleinsten Quadrate ermittelt werden, wobei das Anfitten ausgehend von ersten und zweiten Schichtdickenstartwerten, ersten und zweiten Porositätsstartwerten und ersten und zweiten Rauigkeitsstartwerten durchgeführt wird, welche aus Fitergebnissen eines an einer jeweils benachbarten Position durchgeführten vorangehenden Verfahrensdurchlaufs abgeleitet werden.

Anders ausgedrückt können die physikalischen Eigenschaften einer porösen Schicht nicht lediglich an einer Position oder als über die Schicht gemittelte Eigenschaften ermittelt werden. Stattdessen können diese physikalischen Eigenschaften an vielen verschiedenen Positionen der porösen Schicht ermittelt werden, sodass letztendlich eine Art "Landkarte" (englisch: map) erstellt werden kann, bei der eine räumliche Verteilung der physikalischen Eigenschaften der porösen Schicht dargestellt werden kann.

Dabei können die physikalischen Eigenschaften an einer ersten Position in einer Weise ermittelt werden, wie sie vorangehend ausführlich dargestellt wurde. Anschließend können an benachbarten Positionen die physikalischen Eigenschaften in ähnlicher Weise durch Anfitten jeweils dort aufgenommener Reflexionsverläufe ermittelt werden. Dabei brauchen jedoch zum Setzen der verschiedenen Anfangswerte nicht mehr die Annahmen bzw. Auswertungen durchgeführt werden, wie sie beim Verfahrensdurchlauf betreffend die erste Position nötig waren. Stattdessen können in diesen nachfolgenden Verfahrensdurchläufen als Startwerte jeweils die zugehörigen Ergebnisse aus einem vorangehenden Verfahrensdurchlauf, der für eine benachbarte Position durchgeführt wurde, übernommen werden.

Dem liegt die Überlegung zugrunde, dass sich typischerweise weder die Schichtdicke, noch die Porosität oder die Rauigkeit einer porösen Schicht lateral entlang der porösen Schicht über kurze Distanzen stark ändern. Dementsprechend kann angenommen werden, dass an einer Position in etwa ähnliche physikalische Eigenschaften der porösen Schicht vorherrschen, wie an einer benachbarten Position, deren physikalische Eigenschaften bereits zuvor ermittelt wurden. Als Startwerte bei einem nachfolgenden Verfahrensdurchlauf können somit vorteilhaft die physikalischen Eigenschaften, wie sie bei dem vorangehenden Verfahrensdurchlauf ermittelt wurden, gesetzt werden. Hierdurch kann ein genaues, zuverlässiges und/oder schnelles Konvergieren beim Anfitten des lokalen Reflexionsverlaufs erreicht werden.

Insbesondere beim Einsatz zum Ermitteln physikalischer Eigenschaften einer porösen Doppelschicht kann somit im Regelfall eine grobe Abschätzung der Porosität beider Teilschichten sowie der Dicke der dünneren der beiden Teilschichten genügen, um ein erfolgreiches Anfitten eines ersten Reflexionsverlaufs an einer ersten Position der porösen Schicht zu ermöglichen. Die erhaltenen Parameterwerte sind dann im Allgemeinen gut genug, um erfolgreich als Startwerte, d.h. anfängliche Fitparameter, beim Ermitteln physikalischer Parameter für benachbarte Positionen mithilfe nachfolgender Verfahrensdurchläufe dienen zu können. Hierdurch kann eine gesamte "Landkarte" für Eigenschaften der porösen Schicht generiert werden, vorzugsweise ohne dass weitere Anwenderinterventionen benötigt würden.

Nur unter Verwendung von grundlegenden und ungenauen Informationen über einen untersuchten Schichtenstapel (beispielsweise basierend auf Kenntnissen über eine Prozessierung der Schichten) können Ausführungsformen des hierin beschriebenen Verfahrens es auch einem unerfahrenen Anwender ermöglichen, gemessene Reflexionsverläufe auf einem einzelnen Wafer auf quasi-automatische Weise erfolgreich anzufitten und dadurch Informationen über die physikalischen Eigenschaften einer porösen Schicht zu ermitteln. Das vorgeschlagene Verfahren hat sich dabei als sehr robust auch bei Variationen im Schichtungsprozess und globalen Eigenschaften des Stapels erwiesen. Es wird somit auch einem unerfahrenen Anwender ermöglicht, einfach und zuverlässig räumlich aufgelöste Landkarten einer Schichtdicke, einer Porosität und einer Rauigkeit für einzelne und doppelte poröse Schichtsysteme zu ermitteln.

Gemäß dem zweiten Aspekt der Erfindung wird eine Vorrichtung vorgestellt, die dazu eingerichtet ist, Ausführungsformen des vorangehend beschriebenen Verfahrens auszuführen oder zu steuern. Die Vorrichtung kann hierzu unter anderem über einen Prozessor zur Datenverarbeitung, einen Speicher zur Datenspeicherung und/oder eine oder mehrere Schnittstellen zur Dateneingabe bzw. Datenausgabe verfügen. Der Prozessor kann von einem Computerprogramm gesteuert werden. Dabei kann der Prozessor und/oder das Computerprogramm dazu konfiguriert sein, insbesondere die Schritte des Setzens der unterschiedlichen Startwerte und des Anfittens des erfassten Reflexionsverlaufs durch Durchführen der nichtlinearen Methode der kleinsten Quadrate auszuführen. Über die Schnittstellen können beispielsweise Daten eingelesen werden, welche den Reflexionsverlauf wiedergeben, oder Daten ausgegeben werden, welche die ermittelten physikalischen Eigenschaften der porösen Schicht wiedergeben. In dem Speicher können Daten, welche beispielsweise den Reflexionsverlauf angeben, gespeichert werden.

Gemäß einer Ausführungsform kann die Vorrichtung ferner eine Messeinrichtung zum Messen des im Rahmen des Verfahrens zu erfassenden Reflexionsverlaufs aufweisen. Anders ausgedrückt können eine Messeinrichtung, mithilfe derer Reflexionsmessungen an der Oberfläche eines Substrats durchgeführt werden können, und eine Auswerteeinrichtung, mithilfe derer gemessene Reflexionsverläufe in der hierin beschriebenen Art und Weise ausgewertet werden können, in einer gemeinsamen Vorrichtung integriert sein. Die Messeinrichtung kann hierfür über eine durchstimmbare Lichtquelle verfügen, um einen Lichtstrahl mit einem gewünschten Spektrum auf die Oberfläche des Substrats richten zu können. Die Lichtquelle kann dazu eingerichtet sein, den Lichtstrahl an verschiedenen Positionen auf die Substratoberfläche zu richten, d.h. über die Substratoberfläche scannen zu können. Ferner kann die Messeinrichtung über einen Lichtdetektor verfügen, um an der Substratoberfläche reflektiertes Licht detektieren zu können. Signale des Lichtdetektors können dann einen zu erfassenden Reflexionsverlauf bilden und an die Auswerteeinrichtung übermittelt werden.

Gemäß einer Ausführungsform des dritten Aspekts der Erfindung umfasst ein Computerprogrammprodukt computerlesbare Anweisungen, um einen Computer dazu anzuweisen, Ausführungsformen des hierin beschriebenen Verfahrens auszuführen oder zu steuern. Der Computer kann hierbei als Teil einer Vorrichtung gemäß dem zweiten Aspekt der Erfindung verstanden werden. Das Computerprogrammprodukt kann in jeder beliebigen Computersprache verfasst sein. Das Computerprogrammprodukt kann als Software in geeigneter Weise mit Hardware des Computers zusammenwirken, um eine gewünschte Funktionalität zu implementieren.

Gemäß einer Ausführungsform des vierten Aspekts der Erfindung ist das beschriebene Computerprogrammprodukt auf einem computerlesbaren Medium gespeichert. Das computerlesbare Medium kann jedes beliebige Medium sein, aus dem ein Computer Daten auslesen kann. Beispielsweise kann das computerlesbare Medium eine CD, DVD, Flashspeicher, ROM, PROM, EPROM oder Ähnliches sein. Insbesondere kann das computerlesbare Medium portabel sein. Alternativ kann das computerlesbare Medium auch Teil eines separaten Computers, insbesondere Teil eines Servers oder einer Datenwolke (Cloud) sein, aus dem das Computerprogrammprodukt über ein Datennetzwerk wie beispielsweise das Internet heruntergeladen werden kann.

Es wird darauf hingewiesen, dass mögliche Merkmale und Vorteile von Ausführungsformen der Erfindung hierin teilweise mit Bezug auf ein erfindungsgemäßes Verfahren und teilweise mit Bezug auf eine erfindungsgemäße Vorrichtung beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt eine poröse Schicht an einem Substrat, deren physikalische Eigenschaften gemäß einer Ausführungsform der vorliegenden Erfindung ermittelt werden können.
Fig. 2 zeigt eine Vorrichtung zum Ermitteln physikalischer Eigenschaften einer porösen Schicht gemäß einer Ausführungsform der vorliegenden Erfindung.
Fig. 3 veranschaulicht einen Reflexionsverlauf, anhand dessen physikalische Eigenschaften einer porösen Schicht gemäß einer Ausführungsform der vorliegenden Erfindung ermittelt werden können.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

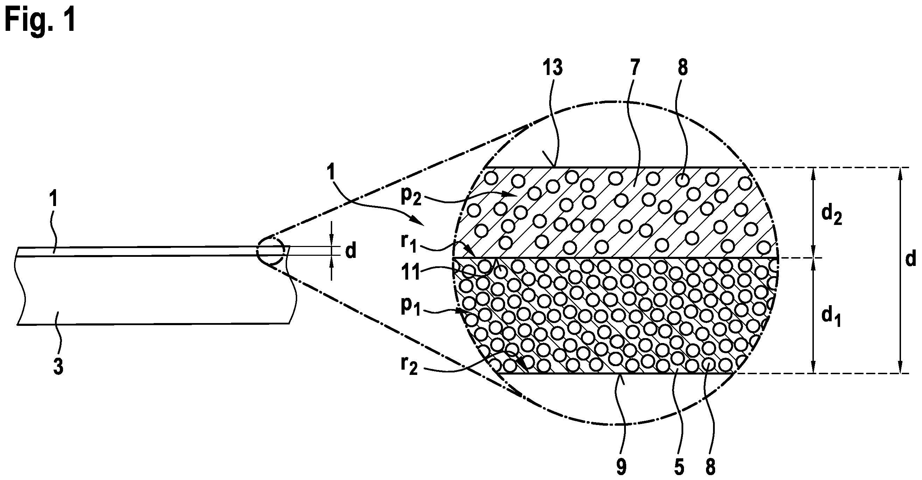

Fig. 1 zeigt ein Beispiel einer porösen Schicht 1, welche sich an einer Oberfläche eines Substrats 3 befindet. Das Substrat 3 kann ein Siliziumwafer sein. Die poröse Schicht 1 kann durch anisotropes Ätzen und eine nachfolgende Temperaturbehandlung des Siliziumwafers erzeugt worden sein. Die poröse Schicht 1 weist eine Schichtdicke d im Bereich von wenigen 100 nm bis hin zu einigen Mikrometern auf.

Wie in der vergrößerten Ansicht in Fig. 1 dargestellt, kann die poröse Schicht 1 als Doppelschicht aus einer ersten Teilschicht 5 und einer zweiten Teilschicht 7 zusammengesetzt sein. Die erste Teilschicht 5 weist eine Schichtdicke d₁ auf, welche erheblich größer sein kann als eine Schichtdicke d₂ der zweiten Teilschicht 7. Im dargestellten Beispiel weist die erste Teilschicht 5 eine deutlich höhere Porosität p₁ auf als die Porosität p₂ in der zweite Teilschicht 7. Diese höhere Porosität wird dadurch bewirkt, dass in der ersten Teilschicht 5 deutlich mehr und/oder deutlich größere Poren 8 enthalten sind als in der zweiten Teilschicht 7. Die erste Teilschicht 5 kann daher auch als hochporös und die zweite Teilschicht 7 als niederporös bezeichnet werden. An einer Grenzfläche 9 zu dem Substrat 1 weist die erste Teilschicht 5 eine Rauigkeit r₁ auf. An einer Grenzfläche 11 zwischen der ersten Teilschicht 5 und der zweiten Teilschicht 7 weist die zweite Teilschicht 7 eine Rauigkeit r₂ auf. Eine der Grenzfläche 11 entgegengesetzte Fläche bildet eine freiliegende Oberfläche 13 der porösen Schicht 1.

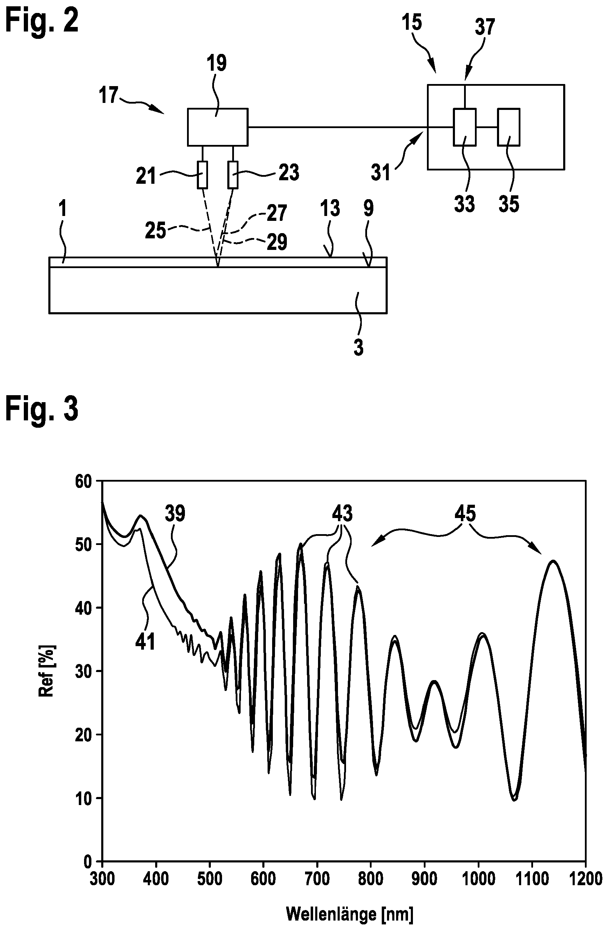

Fig. 2 veranschaulicht eine stark schematisierte Möglichkeit einer Vorrichtung 15, mithilfe derer physikalische Eigenschaften wie die Schichtdicken d, die Porositäten p und die Rauigkeiten r einer porösen Schicht 1 ermittelt werden können. Die Vorrichtung 15 ist hierbei dazu ausgestaltet, einen Reflexionsverlauf, d.h. ein Spektrum von an der porösen Schicht 1 und dem Substrat 3 reflektiertem Licht, auszuwerten. Ein solcher Reflexionsverlauf kann beispielsweise mithilfe einer mit der Vorrichtung 15 gekoppelten Reflexionsmesseinrichtung 17 aufgenommen werden.

Die die Reflexionsmesseinrichtung 17 weist hierzu eine Steuerung 19, eine Lichtquelle 21 und einen Lichtdetektor 23 auf. Die Lichtquelle 21 ist durchstimmbar. Die Steuerung 19 kann die Lichtquelle 21 hinsichtlich des von ihr emittierten Lichtspektrums steuern. Die Lichtquelle 21 emittiert daraufhin einen Lichtstrahl 25 mit einem schmalbandigen Lichtspektrum. Eine Halbwertsbreite dieses Lichtspektrums kann beispielsweise kleiner als 50 nm oder sogar kleiner als 20 nm sein. Der Lichtstrahl 25 trifft dann auf die poröse Schicht 1 und wird teilweise an deren freiliegender Oberfläche 13, teilweise an deren Grenzfläche 9 zu dem Substrat 3 sowie, für den Fall, dass die poröse Schicht 1 als Doppelschicht ausgebildet ist, teilweise an der Grenzfläche 11 zwischen den beiden Teilschichten 5, 7 reflektiert.

Reflektierte Anteile 27, 29 des eingestrahlten Lichtstrahls 25 können sich dabei überlagern und miteinander interferieren, bevor sie auf den Lichtdetektor 23 treffen und von diesem detektiert werden. Eine Intensität des detektierten Lichts, hängt dabei stark von der Art und Weise ab, wie die beiden reflektierten Anteile 27, 29 positiv oder negativ miteinander interferieren. Die Art und Stärke der Interferenz hängt hierbei einerseits von der Wellenlänge des eingestrahlten Lichtstrahls 25 und andererseits von der Schichtdicke d der gesamten porösen Schicht 1 bzw. den einzelnen Schichtdicken d₁, d₂ der beiden Teilschichten 5, 7 und dem Brechungsindex bzw. den Brechungsindices innerhalb der porösen Schicht 1 ab. Die Brechungsindices wiederum hängen von den Porositäten r₁, r₂ ab. Ein Verhältnis zwischen einer Intensität des eingestrahlten Lichtstrahls 25 und einer Intensität des reflektierten Lichts gibt den reflektierten Anteil Ref in Prozent an. Ein Spektrum, bei dem der reflektierte Anteil Ref in Abhängigkeit von der Wellenlänge des eingestrahlten Lichtstrahls 25 angegeben wird, wird hierin als Reflexionsverlauf 39 bezeichnet. Ein Beispiel eines solchen Reflexionsverlaufs 39 ist in Figur 3 dargestellt.

Mithilfe des Reflexionsverlaufs 39 kann die Vorrichtung 15 dann die zu ermittelnden physikalischen Eigenschaften der porösen Schicht 1 in einer weitgehend automatisierten Weise feststellen. Die Vorrichtung 15 verfügt hierzu über eine Eingabeschnittstelle 31, über die sie Daten, die den Reflexionsverlauf 39 wiedergeben, von der Reflexionsmesseinrichtung 17 empfangen kann. Diese Daten können dann von einem Prozessor 33 verarbeitet und gegebenenfalls in einem Speicher 35 zwischengespeichert werden. Letztendlich können die in dem Prozessor 33 ermittelten Ergebnisse über eine Ausgabeschnittstelle 37 ausgegeben werden.

Zunächst wird ein Verfahren beispielhaft geschildert, mit dem die physikalischen Eigenschaften einer porösen Schicht 1 in Form einer Einzelschicht ermittelt werden können. Die physikalischen Eigenschaften umfassen dabei die Schichtdicke d sowie die Porosität p der porösen Schicht 1 und die Rauigkeit r an der Grenzfläche 9 zu dem Substrat 3.

Zunächst werden Startwerte für jeden dieser drei Parameter festgesetzt. Als erfahrungsgemäß unkritischster der drei Parameter kann der Rauigkeitsstartwert auf einen festen vorbestimmten Wert gesetzt werden. Beispielsweise kann der Rauigkeitsstartwert auf 0 gesetzt werden, da dies eine maximale Signalamplitude bringt und somit eine beste Identifikation der Form von Signalen in dem Reflexionsverlauf 39 ermöglicht. Für den Porositätsstartwert kann ein Wert eingesetzt werden, der basierend auf Kenntnissen betreffend die vorangehende Herstellung der porösen Schicht 1 abgeschätzt werden kann. Um den Schichtdickenstartwert zu setzen, können periodische Schwankungen von Reflexionsintensitäten innerhalb des erfassten Reflexionsverlaufs 39 ausgewertet werden. Hierzu können beispielsweise Positionen von Maxima 43 und/oder Minima der Interferenzoszillationen innerhalb des erfassten Reflexionsverlaufs 39 detektiert werden, wobei unter der Annahme, dass der Porositätsstartwert zumindest grob korrekt gesetzt wurde, hieraus eine verhältnismäßig korrekte Abschätzung der Schichtdicke durch einen geeigneten linearen Fit ermittelt werden kann.

Nachdem die verschiedenen Startwerte geeignet gesetzt wurden, werden die tatsächlichen physikalischen Eigenschaften der porösen Schicht 1 durch ein computergestütztes Anfitten des erfassten Reflexionsverlaufs 39 ermittelt. Bei diesem Anfitten wird eine Fit-Kurve 41 unter Verwendung einer nichtlinearen Methode der kleinsten Quadrate, vorzugsweise unter Verwendung eines Trust-Region-Verfahrens oder eines Levenberg-Marquardt-Algorithmus, berechnet. Ein Approximationsvorgang zum Bestimmen der Fit-Kurve 41 startet dabei bei den zuvor gesetzten Startwerten. Eine am besten mit dem tatsächlichen Reflexionsverlauf 39 übereinstimmende Fit-Kurve 41 wird hierbei mit Fit-Parametern erzeugt, welche die realen physikalischen Eigenschaften der porösen Schicht 1 bestmöglich wiedergeben.

In schwierigen Fällen, bei denen beispielsweise Messfehler, ein nicht-ideales Verhalten der porösen Schicht 1, ungenaue Annahmen hinsichtlich der Porosität oder andere Faktoren ein Ermitteln der physikalischen Eigenschaften erschweren, können ergänzend weitere Startwerte für die verschiedenen physikalischen Eigenschaften gesetzt werden. Insbesondere können ergänzende Sätze von Startwerten gesetzt werden, bei denen ein kleinerer Schichtdickenstartwert etwa 10 % oder 20 % kleiner ist als der zuvor ermittelte Schichtdickenstartwert und ein größerer Schichtdickenstartwert etwa 10 % oder 20 % größer ist als dieser zuvor ermittelte Schichtdickenstartwert. Ein Approximieren des Reflexionsverlaufs 39 kann dann mit allen drei Sätzen von Startwerten durchgeführt werden. Aus der am besten mit dem realen Reflexionsverlauf 39 übereinstimmenden Fit-Kurve 41 können dann die tatsächlichen physikalischen Eigenschaften der Schicht 1 mit hoher Zuverlässigkeit ermittelt werden.

Als nächstes wird eine Version des hierin beschriebenen Verfahrens beispielhaft erläutert, bei dem die poröse Schicht 1 als Doppelschicht ausgebildet ist. Jede der beiden Teilschichten 5, 7 zeichnet sich hierbei durch ihre Schichtdicke, ihre Porosität und ihre Rauigkeit aus. Der für die Doppelschicht erfasste Reflexionsverlauf 39 muss daher mit sechs Parametern ausgehend von den zugehörigen sechs Startwerten angefittet werden.

Bei dem Reflexionsverlauf 39 für eine Doppelschicht ist dabei davon auszugehen, dass die schnellsten Oszillationen in dem Spektrum, das heißt periodische Schwankungen in dem Reflexionsverlauf 39 mit einer kleinsten Schwankungsperiode, durch eine Interferenz von Reflexionsanteilen an der dickeren der beiden Teilschichten 5, 7 hervorgerufen werden. Die schnellen Oszillationen können beispielsweise anhand von deren eng beieinander liegenden Maxima 43 erkannt werden. Diese schnellen Oszillationen werden von langsameren Oszillationen moduliert, welche durch die andere, dünnere Teilschicht 7, 5 induziert werden. Die langsameren Oszillationen können anhand einer Schwebung 45 innerhalb des Reflexionsverlaufs 39 erkannt werden.

Die physikalischen Eigenschaften der doppelschichtigen porösen Schicht 1 können in mehreren Schritten ermittelt werden.

In einem ersten Schritt werden die Schichtdicke und die Porosität der dickeren der beiden Teilschichten 5, 7 aufgrund der kleineren Oszillationsperiode innerhalb des Reflexionsverlaufs 39 allein angefittet, wobei die anderen Parameter konstant auf ihren Startwerten gehalten werden. Der Startwert für die Schichtdicke dieser dickeren Teilschicht wird dabei in ähnlicher Weise ermittelt wie bei einer Einzelschicht. Ein erfolgreiches Anfitten der Periode der schnellsten Oszillationen ermöglicht hierbei bereits einen begrenzten Fit-Fehler unabhängig von den Werten der anderen Parameter.

In einem zweiten Schritt werden die Dicke und die Porosität der dünneren der beiden Teilschichten alleine angefittet. Dabei werden die durch das Anfitten in dem ersten Schritt ermittelten Werte für die Schichtdicke und die Porosität der dickeren Teilschicht genutzt.

In einem dritten Schritt werden die Werte für die Schichtdicke und die Porosität, wie sie in den vorangehenden beiden Schritten für die beiden Teilschichten bestimmt wurden, verwendet, um dann die beiden Rauigkeiten, d.h. die Rauigkeit an der Grenzschicht 9 zu dem Substrat 3 und die Rauigkeit an der Grenzschicht 11 zwischen den beiden Teilschichten 5, 7, anzufitten (beispielsweise mit einem Startwert 0).

In einem abschließenden vierten Schritt werden die in den vorangehenden drei Schritten gefundenen Parameterwerte als Startwerte in einem Anfitten aller sechs Parameter verwendet.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: poröse Schicht
- 3: Substrat
- 5: erste Teilschicht
- 7: zweite Teilschicht
- 8: Poren
- 9: Grenzfläche zu dem Substrat
- 11: Grenzfläche zwischen erster und zweiter Teilschicht
- 13: freiliegende Oberfläche der porösen Schicht
- 15: Vorrichtung zum Ermitteln von Eigenschaften poröser Schichten
- 17: Reflexionsmesseinrichtung
- 19: Steuerung
- 21: Lichtquelle
- 23: Lichtdetektor
- 25: ausgesendeter Lichtstrahl
- 27: erster reflektierter Lichtstrahlanteil
- .29: zweiter reflektierter Lichtstrahlanteil
- 31: Eingabeschnittstelle
- 33: Prozessor
- 35: Speicher
- 37: Ausgabeschnittstelle
- 39: Reflexionsverlauf
- 41: Fit-Kurve
- 43: Maxima der schnellen Oszillationen
- 45: Schwebung

## Patentansprüche

1. Verfahren zum computergestützten Ermitteln von physikalischen Eigenschaften einer an einer Oberfläche eines Substrats (3) befindlichen porösen Schicht (1),
wobei die physikalischen Eigenschaften zumindest umfassen:
- eine Schichtdicke (d) der Schicht,
- eine Porosität (p) der Schicht, und
- eine Rauigkeit (r) der Schicht an einer Grenzfläche (9) zu dem die Schicht tragenden Substrat,
wobei das Verfahren umfasst:
- Erfassen eines Reflexionsverlaufs (39) betreffend auf die poröse Schicht eingestrahlten Lichts (25) innerhalb eines Wellenlängenbereichs, in dem die poröse Schicht weitgehend transparent ist, **gekennzeichnet durch**
- Setzen eines vorbestimmten Rauigkeitsstartwerts,
- Setzen eines Porositätsstartwerts basierend auf Kenntnissen betreffend einen Herstellungsprozess zum Bilden der porösen Schicht
- Setzen eines Schichtdickenstartwerts basierend auf einer Auswertung von periodischen Schwankungen von Reflexionsintensitäten innerhalb des erfassten Reflexionsverlaufs,
- Ermitteln der physikalischen Eigenschaften der porösen Schicht durch computergestütztes Anfitten des erfassten Reflexionsverlaufs unter Verwendung einer nichtlinearen Methode der kleinsten Quadrate ausgehend von dem Rauigkeitsstartwert, dem Porositätsstartwert und dem Schichtdickenstartwert.

2. Verfahren nach Anspruch 1,
wobei als die nichtlineare Methode der kleinsten Quadrate ein Levenberg-Marquardt-Algorithmus oder ein Trust-Region-Verfahren verwendet wird.

3. Verfahren nach einem der vorangehenden Ansprüche,
wobei der Reflexionsverlauf Messwerte der Reflexion an der porösen Schicht in Wellenlängenabständen von weniger als 30nm, vorzugsweise weniger als 20nm umfasst.

4. Verfahren nach einem der vorangehenden Ansprüche,
wobei zusätzlich zu dem Schichtdickenstartwert ein kleinerer Schichtdickenstartwert, der weniger als 20%, vorzugsweise weniger als 10% kleiner als der Schichtdickenstartwert ist, und ein größerer Schichtdickenstartwert, der weniger als 20%, vorzugsweise weniger als 10% größer als der Schichtdickenstartwert ist, gesetzt werden,
wobei der erfasste Reflexionsverlauf durch mehrmaliges computergestütztes Anfitten unter Verwendung der nichtlinearen Methode der kleinsten Quadrate ausgehend von dem Rauigkeitsstartwert, dem Porositätsstartwert und eines aus mehreren Werten aus der Gruppe umfassend den Schichtdickenstartwert, den kleineren Schichtdickenstartwert und den größeren Schichtdickenstartwert angefittet wird, wobei die physikalischen Eigenschaften der porösen Schicht basierend auf einem bei dem mehrmaligen computergestützten Anfitten gefundenen besten Fitergebnis ermittelt wird.

5. Verfahren nach einem der vorangehenden Ansprüche,
wobei die poröse Schicht eine erste Teilschicht (5) und eine zweite Teilschicht (7) aufweist,
wobei die physikalischen Eigenschaften zumindest umfassen:
- eine Schichtdicke der ersten Teilschicht,
- eine Porosität der ersten Teilschicht,
- eine Rauigkeit der ersten Teilschicht an einer Grenzfläche zu einem die Schicht tragenden Substrat,
- eine Schichtdicke der zweiten Teilschicht,
- eine Porosität der zweiten Teilschicht,
- eine Rauigkeit der zweiten Teilschicht an einer Grenzfläche zu der ersten Teilschicht.

6. Verfahren nach Anspruch 5,
wobei das Verfahren umfasst:
- Setzen eines vorbestimmten ersten Rauigkeitsstartwerts und eines vorbestimmten zweiten Rauigkeitsstartwerts,
- Setzen eines ersten Porositätsstartwerts und eines zweiten Porositätsstartwerts jeweils basierend auf Kenntnissen betreffend einen Herstellungsprozess zum Bilden der porösen Schicht,
- Setzen eines ersten Schichtdickenstartwerts betreffend eine dickere der ersten und der zweiten Teilschicht basierend auf einer Auswertung von periodischen Schwankungen mit einer kleinsten Schwankungsperiode von Reflexionsintensitäten innerhalb des erfassten Reflexionsverlaufs,
- Setzen eines zweiten Schichtdickenstartwerts betreffend eine dünnere der ersten und der zweiten Teilschicht,
wobei in einem ersten Schritt des Verfahrens eine erste Dicke und eine erste Porosität der dickeren der ersten und der zweiten Teilschicht durch computergestütztes Anfitten des erfassten Reflexionsverlaufs unter Verwendung der nichtlinearen Methode der kleinsten Quadrate ausgehend von dem ersten und dem zweiten Rauigkeitsstartwert, dem ersten und dem zweiten Porositätsstartwert und dem ersten und dem zweiten Schichtdickenstartwert ermittelt werden.

7. Verfahren nach Anspruch 6,
wobei der zweite Schichtdickenstartwert basierend auf Kenntnissen betreffend einen Herstellungsprozess zum Bilden der dünneren Teilschicht gesetzt wird.

8. Verfahren nach einem der Ansprüche 6 und 7,
wobei in einem zweiten Schritt des Verfahrens eine zweite Dicke und eine zweite Porosität der dünneren der ersten und der zweiten Teilschicht durch computergestütztes Anfitten des erfassten Reflexionsverlaufs unter Verwendung der nichtlinearen Methode der kleinsten Quadrate ermittelt werden, wobei das Anfitten ausgehend von einem ersten Schichtdickenstartwert und einem ersten Porositätsstartwert durchgeführt wird, welche aus Fitergebnissen des vorangehenden ersten Schritts des Verfahrens abgeleitet werden.

9. Verfahren nach Anspruch 8,
wobei in einem dritten Schritt des Verfahrens eine erste Rauigkeit der dickeren Teilschicht und eine zweite Rauigkeit der dünneren Teilschicht durch computergestütztes Anfitten des erfassten Reflexionsverlaufs unter Verwendung der nichtlinearen Methode der kleinsten Quadrate ermittelt werden, wobei das Anfitten ausgehend von ersten und zweiten Schichtdickenstartwerten und ersten und zweiten Porositätsstartwerten durchgeführt wird, welche aus Fitergebnissen des vorangehenden ersten Schritts und des vorangehenden zweiten Schritts des Verfahrens abgeleitet werden.

10. Verfahren nach Anspruch 9,
wobei in einem vierten Schritt des Verfahrens alle der physikalischen Eigenschaften der ersten und der zweiten Teilschichten durch computergestütztes Anfitten des erfassten Reflexionsverlaufs unter Verwendung der nichtlinearen Methode der kleinsten Quadrate ermittelt werden, wobei das Anfitten ausgehend von ersten und zweiten Schichtdickenstartwerten, ersten und zweiten Porositätsstartwerten und ersten und zweiten Rauigkeitsstartwerten durchgeführt wird, welche aus Fitergebnissen des vorangehenden ersten Schritts, des vorangehenden zweiten Schritts und des vorangehenden dritten Schritts des Verfahrens abgeleitet werden.

11. Verfahren nach einem der vorangehenden Ansprüche,
wobei die physikalischen Eigenschaften in mehreren aufeinanderfolgenden Verfahrensdurchläufen an mehreren Positionen entlang der Oberfläche des Substrats ermittelt werden,
wobei die physikalischen Eigenschaften an einer zweiten und nachfolgenden der mehreren Positionen durch computergestütztes Anfitten des erfassten Reflexionsverlaufs unter Verwendung einer nichtlinearen Methode der kleinsten Quadrate ermittelt werden, wobei das Anfitten ausgehend von ersten und zweiten Schichtdickenstartwerten, ersten und zweiten Porositätsstartwerten und ersten und zweiten Rauigkeitsstartwerten durchgeführt wird, welche aus Fitergebnissen eines an einer jeweils benachbarten Position durchgeführten vorangehenden Verfahrensdurchlaufs abgeleitet werden.

12. Vorrichtung (15), welche dazu konfiguriert ist, das Verfahren nach einem der vorangehenden Ansprüche auszuführen oder zu steuern.

13. Vorrichtung nach Anspruch 12, ferner aufweisend eine Reflexionsmesseinrichtung (17) zum Messen des im Rahmen des Verfahrens zu erfassenden Reflexionsverlaufs.

14. Computerprogrammprodukt umfassend computerlesbare Anweisungen, welche bei deren Ausführung durch einen Computer den Computer dazu anweisen, das Verfahren nach einem der Ansprüche 1 - 11 auszuführen oder zu steuern.

15. Computerlesbares Medium mit einem darauf gespeicherten Computerprogrammprodukt gemäß Anspruch 14.

## Claims

1. Method for computer-implemented determination of physical properties of a porous layer (1) present on a surface of a substrate (3),
wherein the physical properties comprise at least:
- a layer thickness (d) of the layer,
- a porosity (p) of the layer, and
- a roughness (r) of the layer at an interface (9) with the substrate supporting the layer ,
the method comprising:
- Recording a reflectance curve (39) concerning light (25) irradiated onto the porous layer within a wavelength range in which the porous layer is largely transparent, **characterized by**
- Setting a predetermined roughness start value,
- Setting a porosity start value based on knowledge concerning a manufacturing process for forming the porous layer,
- Setting a layer thickness start value based on an evaluation of periodic fluctuations of reflectance intensities within the recorded reflectance curve,
- Determining the physical properties of the porous layer by computer-implemented fitting of the recorded reflectance curve using a non-linear least squares method based on the roughness start value, the porosity start value and the layer thickness start value.

2. Method according to claim 1,
wherein a Levenberg-Marquardt algorithm or a trust region method is used as the non-linear least squares method.

3. Method according to any of the preceding claims,
wherein the reflectance curve comprises measured values of the reflectance at the porous layer at wavelength intervals of less than 30nm, preferably less than 20nm.

4. Method according to any of the preceding claims,
wherein, in addition to the layer thickness start value, a smaller layer thickness start value which is less than 20%, preferably less than 10% smaller than the layer thickness start value, and a larger layer thickness start value, which is less than 20%, preferably less than 10% larger than the layer thickness start value, are set,
the recorded reflectance curve being fitted by repeated computer-implemented fitting using the non-linear least squares method starting from the roughness start value, the porosity start value and one of a plurality of values selected from the group comprising the layer thickness start value, the smaller layer thickness start value and the larger layer thickness start value, the physical properties of the porous layer being determined based on a best fit result found in the repeated computer-implemented fitting.

5. Method according to any of the preceding claims,
wherein the porous layer comprises a first sub-layer (5) and a second sub-layer (7),
the physical properties comprising at least:
- a layer thickness of the first sub-layer,
- a porosity of the first sub-layer,
- a roughness of the first sub-layer at an interface with a substrate supporting the layer,
- a layer thickness of the second sub-layer,
- a porosity of the second sub-layer,
- a roughness of the second sub-layer at an interface with the first sub-layer.

6. Method according to claim 5,
the method comprising:
- Setting a predefined first roughness start value and a predefined second roughness start value,
- Setting a first porosity start value and a second porosity start value, each based on knowledge of a manufacturing process for forming the porous layer,
- Setting a first layer thickness start value relating to a thicker of the first and of the second sub-layers based on an evaluation of periodic fluctuations with a smallest fluctuation period of reflectance intensities within the recorded reflectance curve,
- Setting a second layer thickness start value relating to a thinner of the first and second sub-layers,
wherein, in a first step of the method, a first thickness and a first porosity of the thicker of the first and second sub-layers are determined by computer-implemented fitting of the recorded reflectance curve using the non-linear least squares method based on the first and second roughness start values, the first and second porosity start values and the first and second layer thickness start values.

7. Method according to claim 6,
wherein the second layer thickness start value is set based on knowledge concerning a manufacturing process for forming the thinner sub-layer.

8. Method according to one of claims 6 and 7,
wherein, in a second step of the method, a second thickness and a second porosity of the thinner of the first and second sub-layers are determined by computer-implemented fitting of the recorded reflectance curve using a non-linear least squares method, with fitting being carried out based on a first layer thickness start value and a first porosity start value derived from fit results of the preceding first step of the method.

9. Method according to claim 8,
wherein, in a third step of the method, a first roughness of the thicker sub-layer and a second roughness of the thinner sub-layer are determined by computer-implemented fitting of the recorded reflectance curve using the non-linear least squares method, with fitting being carried out based on first and second layer thickness start values and first and second porosity start values derived from fit results of the preceding first step and the preceding second step of the method.

10. Method according to claim 9,
wherein, in a fourth step of the method, all of the physical properties of the first and second sub-layers are determined by computer-implemented fitting of the recorded reflectance curve using the non-linear least squares method, with fitting being carried out based on first and second layer thickness start values, first and second porosity start values and first and second roughness start values derived from fit results of the preceding first step, the preceding second step and the preceding third step of the method.

11. Method according to any of the preceding claims,
wherein the physical properties are determined in a plurality of successive runs of the method at a plurality of positions along the surface of the substrate,
the physical properties being determined at a second and subsequent instances of the plurality of positions by computer-implemented fitting of the recorded reflectance curve using a non-linear least squares method, with fitting being carried out based on first and second layer thickness start values, first and second porosity start values, and first and second roughness start values derived from fit results of a previous run of the method performed at a respective neighboring position.

12. Apparatus (15) configured to perform or control the method according to any of the preceding claims.

13. Apparatus according to claim 12, further comprising a reflectance measuring device (17) to measure the reflectance curve to be recorded upon performing the method.

14. Computer program product comprising computer-readable instructions which, when executed by a computer, direct the computer to execute or control the method according to any of the claims 1 - 11.

15. Computer-readable medium having a computer program product according to claim 14 stored thereon.

## Revendications

1. Procédé pour déterminer par ordinateur des propriétés physiques d'une couche poreuse (1) située sur une surface d'un substrat (3),
dans lequel les propriétés physiques comprennent au moins :
- une épaisseur de couche (d) de la couche,
- une porosité (p) de la couche, et
- une rugosité (r) de la couche au niveau d'une interface (9) avec le substrat portant la couche,
dans lequel le procédé comprend de :
- détecter une courbe de réflexion (39) concernant de lumière (25) projetée sur la couche poreuse dans une gamme de longueurs d'onde dans laquelle la couche poreuse est en grande partie transparente, **caractérisé par**
- définir une valeur de rugosité initiale prédéterminée,
- définir une valeur de porosité initiale sur la base de connaissances concernant un processus de fabrication destiné à former la couche poreuse,
- définir une valeur d'épaisseur de couche initiale sur la base d'une évaluation de fluctuations périodiques d'intensités de réflexion dans les limites de la courbe de réflexion détectée,
- déterminer des propriétés physiques de la couche poreuse par un ajustement assisté par ordinateur de la courbe de réflexion détectée en utilisant une méthode non linéaire des moindres carrés en partant de la valeur de rugosité initiale, de la valeur de porosité initiale et de la valeur d'épaisseur de couche initiale.

2. Procédé selon la revendication 1,
dans lequel, en tant que méthode non linéaire des moindres carrés, un algorithme de Levenberg-Marquardt ou un procédé à région de confiance est utilisé.

3. Procédé selon l'une des revendications précédentes,
dans lequel la courbe de réflexion comprend des valeurs mesurées de la réflexion sur la couche poreuse à des intervalles de longueur d'onde inférieurs à 30 nm, de préférence inférieurs à 20 nm.

4. Procédé selon l'une des revendications précédentes,
dans lequel, en plus de la valeur d'épaisseur de couche initiale, sont définies une valeur d'épaisseur de couche initiale plus petite, qui est inférieure à 20 %, de préférence inférieure à 10 %, de moins que la valeur d'épaisseur de couche initiale, et une valeur d'épaisseur de couche initiale plus élevée, qui est inférieure à 20 %, de préférence inférieure à 10 %, de plus que la valeur d'épaisseur de couche initiale,
dans lequel la courbe de réflexion détectée est ajustée par un ajustement répété assisté par ordinateur en utilisant la méthode non linéaire des moindres carrés en partant de la valeur de rugosité initiale, de la valeur de porosité initiale et d'une valeur parmi plusieurs valeurs du groupe comprenant la valeur d'épaisseur de couche initiale, la valeur d'épaisseur de couche initiale plus petite et la valeur d'épaisseur de couche initiale plus grande,
dans lequel les propriétés physiques de la couche poreuse sont déterminées sur la base d'un meilleur résultat d'ajustement trouvé lors de l'ajustement répété assisté par ordinateur.

5. Procédé selon l'une des revendications précédentes,
dans lequel la couche poreuse comprend une première sous-couche (5) et une seconde sous-couche (7),
dans lequel les propriétés physiques comprennent au moins :
- une épaisseur de couche de la première sous-couche,
- une porosité de la première sous-couche,
- une rugosité de la première sous-couche à une interface avec un substrat portant la couche,
- une épaisseur de couche de la seconde sous-couche,
- une porosité de la seconde sous-couche,
- une rugosité de la seconde sous-couche au niveau d'une interface avec la première sous-couche.

6. Procédé selon la revendication 5,
dans lequel le procédé comprend de :
- définir une première valeur de rugosité initiale prédéterminée et une seconde valeur de rugosité initiale prédéterminée,
- définir respectivement une première valeur de porosité initiale et une seconde valeur de porosité initiale sur la base de connaissances concernant un processus de fabrication destiné à former la couche poreuse,
- définir une première valeur d'épaisseur de couche initiale concernant une sous-couche plus épaisse parmi les première et seconde sous-couches sur la base d'une évaluation de fluctuations périodiques avec une période de fluctuation la plus petite des intensités de réflexion dans les limites de la courbe de réflexion détectée,
- définir une seconde valeur d'épaisseur de couche initiale concernant une sous-couche plus mince parmi les première et seconde sous-couches,
dans lequel, dans une première étape du procédé, une première épaisseur et une première porosité de la plus épaisse des première et seconde sous-couches sont déterminées par un ajustement assisté par ordinateur de la courbe de réflexion détectée en utilisant la méthode non linéaire des moindres carrés en partant de la première et de la seconde valeur de rugosité initiale, de la première et de la seconde valeur de porosité initiale et de la première et de la seconde valeur d'épaisseur de couche initiale.

7. Procédé selon la revendication 6,
dans lequel la seconde valeur d'épaisseur de couche initiale est définie sur la base de connaissances concernant un processus de fabrication destiné à former la sous-couche plus mince.

8. Procédé selon l'une des revendications 6 et 7,
dans lequel, dans une deuxième étape du procédé, une seconde épaisseur et une seconde porosité de la plus mince des première et seconde sous-couches sont déterminées par un ajustement assisté par ordinateur de la courbe de réflexion détectée en utilisant la méthode non linéaire des moindres carrés, dans lequel l'ajustement est réalisé en partant d'une première valeur d'épaisseur de couche initiale et d'une première valeur de porosité initiale, qui sont dérivées de résultats d'ajustement de la première étape précédente du procédé.

9. Procédé selon la revendication 8,
dans lequel, dans une troisième étape du procédé, une première rugosité de la sous-couche plus épaisse et une seconde rugosité de la sous-couche plus mince sont déterminées par un ajustement assisté par ordinateur de la courbe de réflexion détectée en utilisant la méthode non linéaire des moindres carrés, dans lequel l'ajustement est réalisé en partant des première et seconde valeurs d'épaisseur de couche initiale et des première et seconde valeurs de porosité initiale, qui sont dérivées de résultats d'ajustement de la première étape précédente et de la deuxième étape précédente du procédé.

10. Procédé selon la revendication 9,
dans lequel, dans une quatrième étape du procédé, toutes les propriétés physiques des première et seconde sous-couches sont déterminées par un ajustement assisté par ordinateur de la courbe de réflexion détectée en utilisant la méthode non linéaire des moindres carrés, dans lequel l'ajustement est réalisé en partant des première et seconde valeurs d'épaisseur de couche initiale, des première et seconde valeurs de porosité initiale et des première et seconde valeurs de rugosité initiale, qui sont dérivées de résultats d'ajustement de la première étape précédente, de la deuxième étape précédente et de la troisième étape précédente du procédé.

11. Procédé selon l'une des revendications précédentes,
dans lequel les propriétés physiques sont déterminées dans une pluralité exécutions successives du procédé à une pluralité de positions le long de la surface du substrat,
dans lequel les propriétés physiques à une deuxième position et aux positions suivantes parmi la pluralité de positions sont déterminées par un ajustement assisté par ordinateur de la courbe de réflexion détectée en utilisant une méthode non linéaire des moindres carrés, dans lequel l'ajustement est réalisé en partant des première et seconde valeurs d'épaisseur de couche initiale, des première et seconde valeurs de porosité initiale et des première et seconde valeurs de rugosité initiale, qui sont dérivées de résultats d'ajustement d'une exécution précédente du procédé à une position adjacente respective.

12. Dispositif (15) qui est configuré pour mettre en œuvre ou commander le procédé selon l'une des revendications précédentes.

13. Dispositif selon la revendication 12, comprenant en outre un dispositif de mesure de réflexion (17) pour mesurer la courbe de réflexion à détecter dans le cadre du procédé.

14. Produit de programme informatique comprenant des instructions lisibles par ordinateur qui, lorsqu'elles sont exécutées par un ordinateur, ordonnent à l'ordinateur de mettre en œuvre ou de commander le procédé selon l'une des revendications 1 à 11.

15. Support lisible par ordinateur sur lequel est enregistré un produit de programme informatique selon la revendication 14.
